# FASCICULE DE BREVET EUROPEEN

(11) **EP 0 062 296 B1**
(45) Date de publication et mention de la délivrance du brevet: **10.07.1985**
(21) Numéro de dépôt: 82102710.9
(22) Date de dépôt: 31.03.1982
(51) Int. Cl.: H04Q 11/04, H04Q 3/54

(54) **Autocommutateur temporel à commande répartie**
Automatisches Zeitmultiplex-Vermittlungssystem mit verteilter Steuerung
Automatic TDM switching system with distributed control

(30) Priorité: 03.04.1981 FR 8106807
(43) Date de publication de la demande: 13.10.1982
(73) Titulaire: COMPAGNIE INDUSTRIELLE DES TELECOMMUNICATIONS CIT-ALCATEL S.A. dite:, F-75008 Paris (FR)
(72) Inventeur: Caizergues, Paul, F-78350 Jouy En Josas (FR); Martin, Maurice, F-75013 Paris (FR)
(74) Mandataire: Weinmiller, Jürgen

## Description

L'invention concerne un autocommutateur temporel à commande répartie, utilisable en particulier pour la commutation de circuits ou lignes téléphoniques, et de lignes de transmission de données.

L'introduction dans les centraux téléphoniques, il y a plus de dix ans, de calculateurs puissants et ayant un faible taux de panne, est allé de pair avec la centralisation des fonctions de commande. Les calculateurs permettent en effet le traitement en temps réel des événements téléphoniques, et supportent d'autre part des logiciels offrant des services nouveaux et des possibilités d'exploitation très riches.

Depuis, pour des raisons d'évolutivité, de facilité d'exploitation, de modularité et de sûreté de fonctionnement, il est apparu préférable de répartir les fonctions de commande des centraux ainsi que le décrit notamment le document International Switching Symposium, 11 Mars 1979, Paris (FR) de F. ANCEAU el al, qui est intitulé »Projet d'architecture pour la commande d'un autocommutateur Téléphonique«.

Cet article présente un autocommutateur temporel comportant des unités de terminaux, diverses, reliées au réseau de connexion par des liaisons multiplexes et pilotées par des microprocesseurs, un ensemble d'unités de commande constitué de microprocesseurs reliés entre eux par un réseau d'échange d'informations, du type liaison série, et répartis en microprocesseurs de gestion équipés de périphériques et en microprocesseurs de commande, ainsi qu'un logiciel de commande réparti entre les microprocesseurs.

En effet, les systèmes à commande répartie sont de plus en plus intéressants sur le plan de la souplesse et de la modularité, et les facxteurs nouveaux apparus ces dernières années favorisent particulièrement les autocommutateurs temporels à commande répartie. Ces facteurs sont les suivants:
- Apparition de microprocesseurs puissants, de circuits LSI associés, et d'outils de développement de logiciel pour microprocesseurs;
- Possibilité d'utilisier le réseau de connexion pour acheminer des liaisons de commande sur des voies numériques multiplexées;
- Possibilité pour l'autocommutateur de commuter des lignes de transmission et de services télématiques à l'aide de terminaux commandés par microprocesseurs.

Dans les systèmes connus à commande par plusieurs calculateurs, ceux-ci sont souvent reliés à une ou plusieurs lignes bus communes, auxquelles sont également reliées un certain nombre de ressources communes telles des mémoires périphériques.

Ces ensembles sont difficiles à gérer et sont vulnérables. D'autre part le nombre de calculateurs d'un même ensemble est assez limité. Une telle structure n'est pas adaptée dans le cas d'un central téléphonique piloté par un pool de microprocesseurs et doté d'unités de terminaux à microprocesseur car il peut être nécessaire dans ce cas de relier une trentaine de processeurs à une centaine d'unités de terminaux.

Le but de l'invention est de réaliser un central piloté par microprocesseurs dialoguant entre eux par messages et ne partageant ni bus informatique ni ressources communes, dans le cadre d'un système modulaire, dont les équipements ont une redondance calculée et organisée de manière à ce que les interventions urgentes soient tout à fait exceptionnelles.

L'invention s'applique à un autocommutateur temporel comportant un réseau de connexion, des unités de terminaux reliées au réseau de connexion par des liaisons multiplexes et pilotées par des microprocesseurs, un ensemble d'unités de commande constitué de microprocesseurs reliés entre eux par un réseau d'échange d'informations, du type liaison série, et répartis en microprocesseurs de gestion équipés de périphériques et en microprocesseurs banalisés de commande, ainsi qu'un logiciel réparti entre les microprocesseurs des différentes unités.

Selon une caractéristique de l'invention, les microprocesseurs de commande, reliés aux microprocesseurs de gestion et à des marqueurs de pilotage du réseau de connexion par un réseau d'échange d'informations, du type liaison série point à point, à procédure sémaphore, géré en accès par un distributeur, sont aussi reliés au réseau de connexion par des liaisons multiplexes, exploitées en procédure sémaphore, pour les échanges avec les microprocesseurs des unités de terminaux de plus le logiciel de commande est constitué de machines logiques, individuellement adressables indépendamment des microprocesseurs où elles sont réparties, et fonctionnellement indépendantes les unes des autres dans l'accomplissement des tâches spécifiques qui leur sont individuellement affectées et pour lesquelles elles communiquent entre elles par échange de messages en procédure sémaphore, via les différentes liaisons.

L'invention va être précisée par la description qui va suivre d'un mode préféré de réalisation de l'invention, donné à titre d'exemple non limitatif, à l'aide des figures incluses qui représentent:
- Figure 1: un diagramme général d'un autocommutateur à réseau de connexion temporel, selon l'invention,
- Figure 2: un diagramme d'une unité de terminaux d'abonnés,
- Figure 3: un diagramme général d'un plan de réseau de connexion,
- Figure 4: un schéma général d'un commutateur temporel,
-< Figure 5: divisée en deux parties 5A et 5B raccordées au point S des circuits de commutation,
- Figure 6: des schémas de principe des principaux circuits d'un commutateur,
- Figure 7: un schéma d'un marqueur et d'un automate d'accès aux liaisons de commande,
- Figure 8: un diagramme d'une unité de commande,
- Figure 9: un diagramme d'une unité de commande comportant des périphériques informatiques,
- Figure 10: un schéma simplifié de la carte processeur des unités de commande,
- Figure 11: un schéma simplifié des distributeurs gérant l'accès aux liaisons d'échanges interprocesseurs,
- Figure 12: un schéma simplifié d'un coupleur d'accès aux liaisons d'échanges interprocesseurs,
- Figure 13: un schéma simplifié d'un coupleur d'accès aux canaux sémaphores portés par les liaisons MIC.

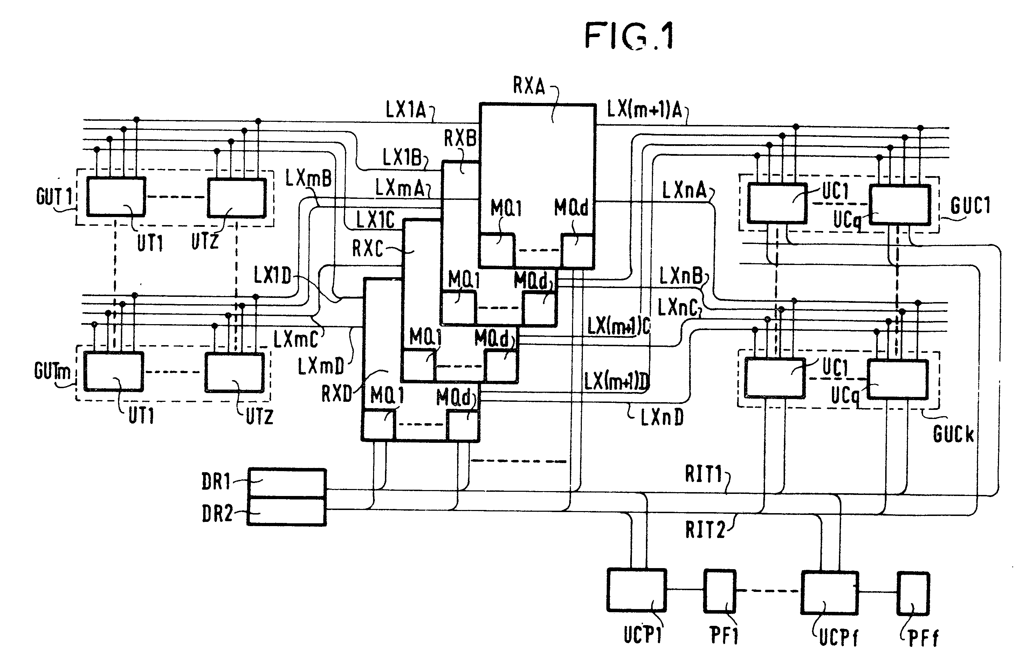

L'autocommutateur temporel représenté de manière simplifiée à la figure 1 fait également l'objet des demandes européennes EP 62 293 et EP 62 295 en ce qui concerne respectivement l'ensemble de commande et le réseau de connexion qui y sont revendiqués plus spécifiquement, il comporte:
- Des groupes d'unités de terminaux GuT1 à GuTm comportant des terminaux d'abonnés, des circuits analogiques et numériques, et des terminaux auxiliaires de signalisation, d'émission de tonalités et de films parlants, d'essais de lignes d'abonnés et de circuits, de circuits de conférence, etc.
- Un réseau de connexion central à un seul étage de commutation, organisé en plans indépendants, par exemple quatre plans RXA à RXD. Les chiffres donnés ici et dans la suite sont de simplex exemples destinés à préciser un mode de réalisation ou à simplifier la représentation.
- Un ensemble de commande à architecture répartie formé de groupes GUC1 à GUCk d'unités de commande UC identiques, par exemple des microprocesseurs. Les unités de commande proprement dites UC1 à UCq sont banalisées. L'ensemble de commande comporte également des unités UCP1 à UCPf qui gèrent des groupes de périphériques PF1 à PFf. Ces unités peuvent être identiques aux précédentes, maius elles ne sont pas banalisées complètement du fait de leur liaisons physiques avec les périphériques.

Les liaisons qui interconnectent ces trois ensembles sont les suivantes:
- Les unités de terminaux UT (UT1 à UTz) sont reliées à chaque plan RXA à RXD du réseau de connexion par une liaison multiplex LX telles LX1A à LXmD comportant 32 voies de 8 e. b., d'un débit de 2 M e. b/s dans chaque sens de transmission. Les unités de terminaux UT d'un même groupe sont reliées en parallèle aux mêmes liaisons multiplex LX.
- Les unités de commandes UC1 à UCq sont également reliées au réseau de connexion par des liaisons multiplex LX (m + 1) A à LXnD, à raison d'une liaison par groupe GUC vers chaque plan. Les messages échangés entre unités de commande et unités de terminaux empruntent des voies temporelles des liaisons LX, reliées par le réseau de connexion d'une manière semi-permanente et reconfigurable. On réalise ainsi des canaux de transmission de données d'un débit de 64 k e.b/s qui sont utilisés suivant une procédure dite HDLC définie par le CCITT norme ISO.
- Les unités de commande UC et UCP sont reliées entre elles par un réseau d'échange d'informations du type liaison point à point dupliquée pour des raisons de sécurité RIT1, RIT2. Il s'agit d'une liaison série utilisant également une procédure HDLC. L'accès à la liaison est géré par un distributeur dupliqué DR1, DR2 qui délivre les autorisations d'émission et supervise la durée d'utilisation. La liaison comporte cinq paires de fils vers chaque station raccordée pour les fonctions d'appel, d'autorisation, d'horloge, d'émission et de réception.

Les liaisons entre les unités de commande UC et les unités de terminaux UT sont réalisées dans le réseau de connexion au moyen de connexions semi-permanentes établies entre les voies MIC.

Le réseau de connexion central RXA à RXD est commandé par des marqueurs MQ1 à MQd pilotés par les unités de commande UC également par l'intermédiaire des liaisons RIT1, RIT2.

Toutes les unités citées plus haut UT, UC, UCP, MQ disposent d'un circuit d'émission/réception de messages de type HDLC, par exemple d'un circuit de type MC 6854 de la société MOTOROLA ou 8273 de la société INTEL.

Pour les unités de terminaux UT, il faut également disposer d'un étage de commutation dans chaque unité pour permettre de connecter un terminal quelconque à une voie temporelle de l'une quelconque des liaisons multiplex LX qui desservent cette unité.

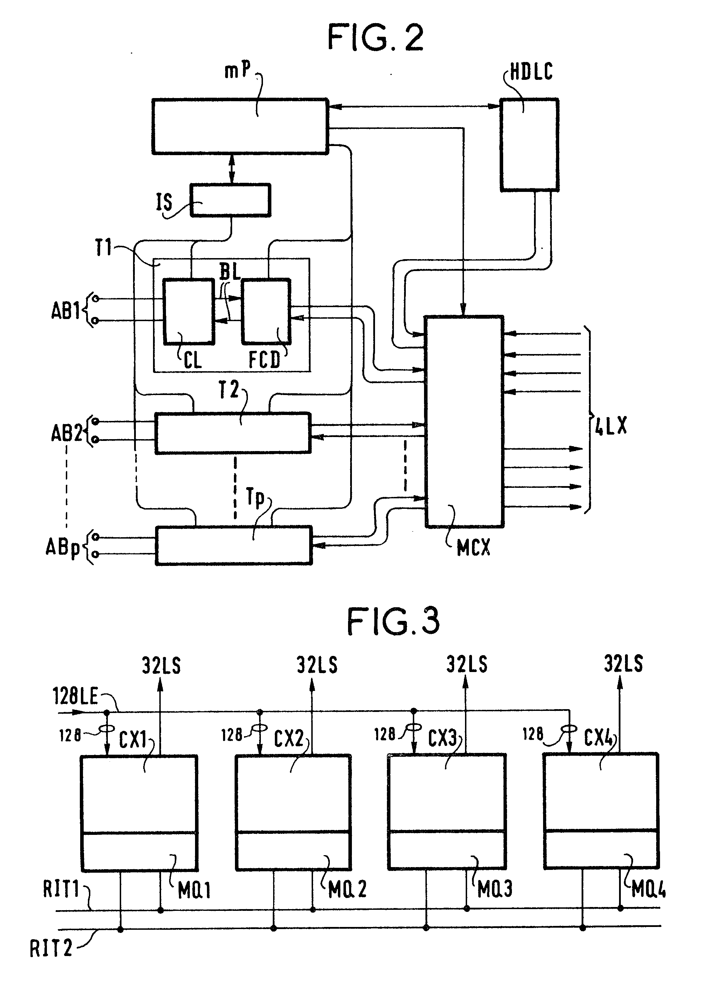

Un exemple d'unité de terminaux d'abonnés est montré à la figure 2. Chaque terminal T1 à Tp d'abonné AB1 à ABp est formé d'un circuit de ligne CL, comportant des moyens d'alimentation, de protection, de supervision de boucle et d'injection de sonnerie, et d'un circuit FCD de filtrage et de codage analogique/digital de type Codec.

L'unité de terminaux UT est pilotée par un microprocesseur mP relié aux liaisons multiplex LX ici au nombre de quatre par un circuit d'émission-réception HDLC. L'étage de commutation est dans cet exemple une matrice d'aiguillage MCX de type spatial.

L'aiguillage temporel est réalisé au niveau des circuits de filtrage et de codage FCD par synchronisation sur la voie choisie, sous la commande du microprocesseur. Celui-ci pilote également les circuits de ligne CL par l'intermédiaire d'une interface IS de supervision et de commande.

Le réseau de connexion central a un seul étage de commutation et il est organisé en quatre plans indépendants. Chaque plan du réseau de connexion a une capacité de 128 liaisons multiplex bidirectionnelles LX c'est-à-dire qu'il peut relier une voie quelconque de l'une des 128 liaisons entrantes LE à une voie quelconque de l'une des 128 liaisons sortantes LS (figure 3).

Un plan du réseau de connexion comporte quatre commutateurs CX1 à CX4 équipés chacun d'un marqueur MQ1 à MQ4 et d'une capacité de 128 liaisons entrantes LE et de 32 liaisons sortantes LS. Les liaisons LE sont donc multiplées sur les quatre commutateurs du plan.

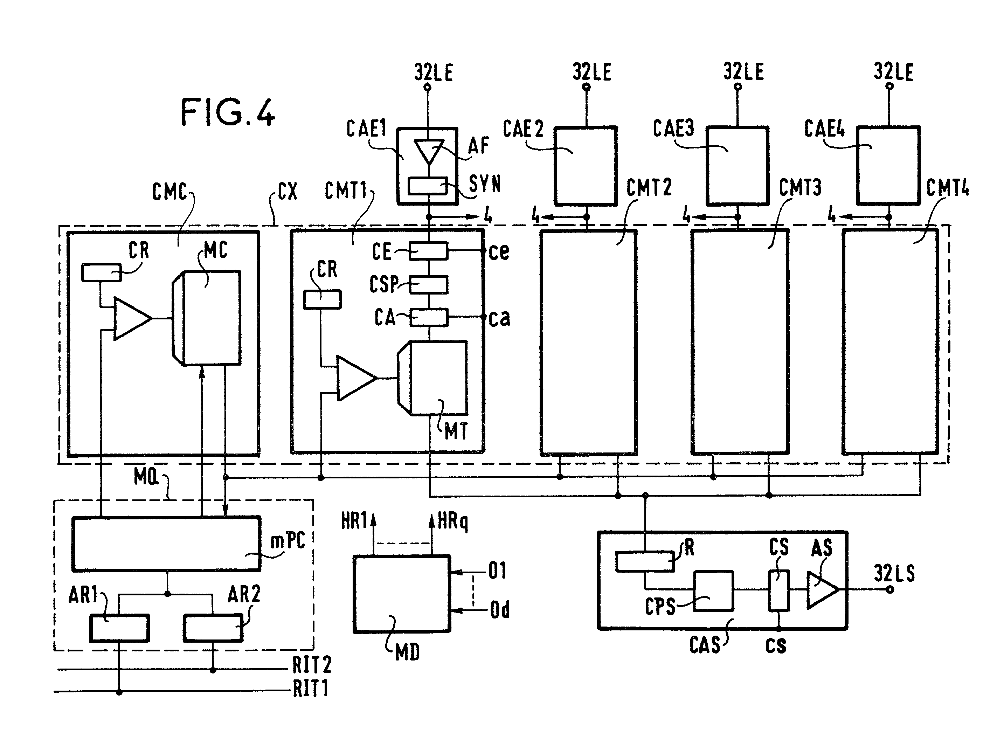

La structure d'un commutateur CX est représentée à la figure 4. Les 128 lignes LE sont réparties sur quatre circuits d'amplification d'entrée CAE1 à CAE4 comportant chacun 32 amplificateurs AF et un circuit de synchronisation SYN. Les circuits d'amplification d'entrée CAE sont communs aux quatre commutateurs CX d'un même plan et desservent chacun 32 des 128 liaisons LE aboutissant à ce plan. Chaque circuit d'amplificateur d'entrée CAE est relié à un des circuits de mémoire tampon CMT1 à CMT4, das chaque commutateur CX, ces circuits constituant des matrices de connexion carrées et comportant chacun successivement un circuit de contrôle d'entrée par prélèvement CE, un circuit de conversion série-parallèle CSP, et un circuit d'accès CA à une mémoire tampon MT. Le circuit d'accès CA permet également l'injection d'échantillons pour un contrôle dit »actif« du réseau de connexion.

La mémoire MT comporte 1024 mots de 8 e.b, soit un mot par voie des 32 lignes LE concernées, et le débit d'entrée-sortie de la mémoire est de 8 MHz, c'est-à-dire un débit proche du maximum permis avec la technologie TTL utilisée.

L'adressage est de type »commande aval« c'est-à-dire qu'il est fourni en écriture par un compteur CR et en lecture par un circuit de commande CMC piloté par le marqueur MQ. La mémoire de commande MC fournit l'adresse de lecture des mémoires MT des quatre circuits de mémoire tampons CMT1 à CMT4, elle est elle-même adressée cyclique ment en lecture et par le marqueur en écriture pour permettre l'inscription de chaque nouvelle connexion ou déconnexion.

Le marqueur MQ comporte un microprocesseur mPC qui est relié aux liaisons RIT1, RIT2 par des circuits d'accès AR1, AR2 décrits plus loin.

Les sorties des mémoires tampon MT des quatre circuits de mémoire tampon CMT1 à CMT4 d'un plan sont reliées en parallèle à un circuit d'amplification de sortie CAS comportant des registres tampons R, reliés à un circuit de conversion parallèle - série CPS lui-même relié à un circuit CS de prélèvement de sortie d'échantillons »cs« desservant un groupe de 32 amplificateurs AS reliés chacun à une liaison sortante LS différente.

L'ensemble des signaux d'horloge »HR1 à »HRq« nécessaires au fonctionnement du commutateur est fourni par un module de distribution de signaux MD piloté par des oscillateurs 01 à Od non figurés de l'autocommutateur.

La modularité du réseau est la suivante:
- jusqu'à 32 groupes G d'unités de terminaux GUT ou d'unités de commande GUC il suffit d'équiper un commutateur avec un seul circuit de mémoire tampon CMT.
- de 33 à 64 groupes, il faut deux commutateurs équipés chacun de deux mémoires tampon,
- de 65 à 96 groupes: il faut trois commutateurs avec chacun trois mémoires tampons,
- de 97 à 128 groupes: il faut quatre commutateurs entièrement équipés.

La description qui suit concerne un mode de réalisation des principaux circuits constituant les commutateurs.

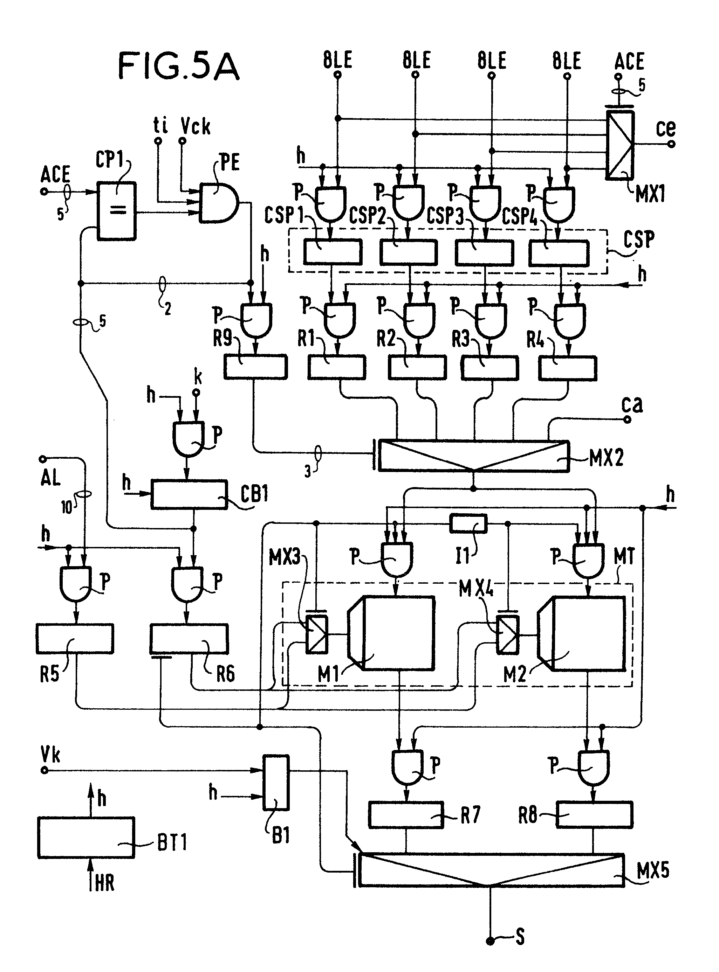

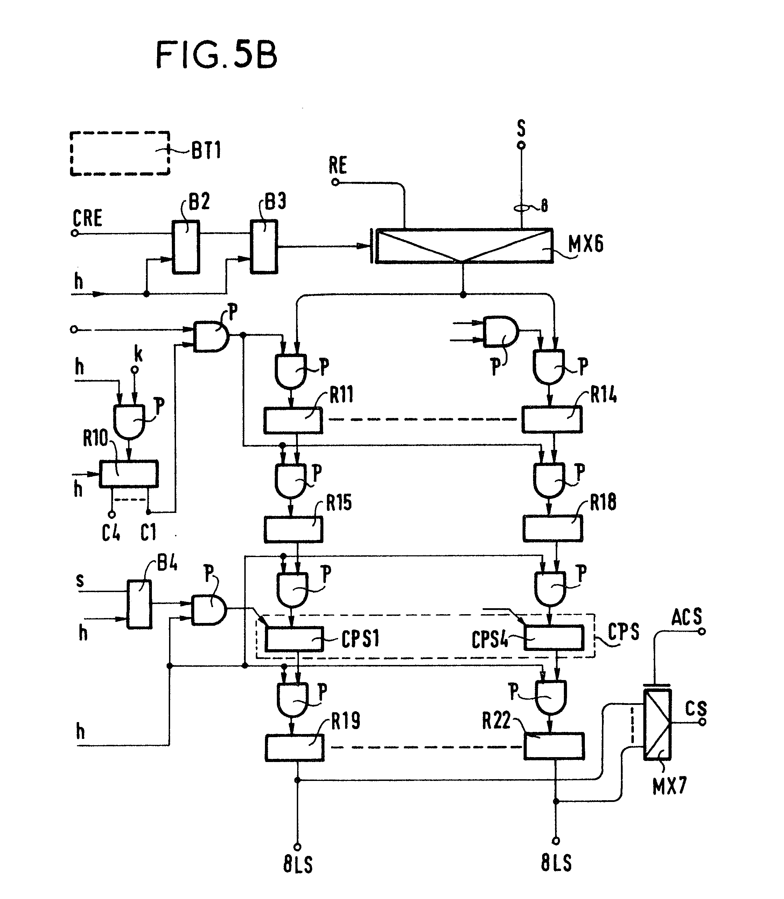

Les circuits de mémoire tampon CMT et d'amplification de sortie CAS sont représentés respectivement sur les figures 5A et 5B. Les signaux d'horloge et de synchronisation sont distribués par un circuit de base de temps BT1 qui estlui-même synchronisé avec le module de distribution de signaux MD du commutateur (figure 4). Le circuit BT1 délivre des signaux »h« qui ne seront pas décrits en détail car ils sont du domaine de l'art connu, et ils découlent du fonctionnement des circuits, tel qu'il est décrit plus loin.

Le prélèvement du signal »ce« sur les trente deux liaisons LE du commutateur temporel est réalisé au moyen d'un multiplexeur MX1 individuellement relié aux trente deux liaisons et l'adresse »ACE« de la liaison à contrôler est fournie par le circuit CMC de ce commutateur CX.

Le circuit de conversion CSP est formé de quatre circuits intégrés CSP1 à CSP4 de type »MICSPA« reliés chacun à huit des 32 liaisons entrantes du circuit de mémoire tampon CMTvia autant de portes P. Les sorties des circuits CSP1 à CSP4 sont respectivement reliées à quatre registres R1 à R4. L'aiguillage des échantillons vers la mémoire tampon est effectué par un multiplexeur MX2, dont une entrée est affectée à l'injection d'un code de contrôle actif »ca« marqué par exemple par câblage.

Des portes de type »ET« globalement référencées P qui sont validées par la base de temps BT1 contrôlent l'entrée des registres du circuit de conversion CSP, de la mémoire tampon MT et en général tous les transferts. Ces portes ne seront plus mentionnées, par la suite, de manière à ne pas alourdir la description.

Pour permettre l'utilisation de la mémoire tampon MT à une vitesse maximale, celle-ci a été dédoublée en deux parties M1 et M2 utilisées simultanément l'une en lecture et l'autre en écriture. L'adressage lecture AL fourni par la mémoire de commande MC du commutateur CX est acheminé par un registre R5 et des multiplexeurs MX3 et MX4. L'adressage écriture, fourni par un compteur CB1 à une fréquence de rotation de 8 MHz, est acheminé par un registre R6 et les mêmes multiplexeurs. Le compteur possède une capacité doublée (11 e.b au lieu de 10 pour adresser 1024 mots) pour permettre l'utilisation alternée des deux mémoires, l'élément binaire de poids faible contrôle directement le multiplexeur MX3 et l'entrée de la mémoire M1, et à travers un inverseur 11 le multiplexeur MX4 et la mémoire M2. Le compteur CB1 est synchronisé par la base de temps BT1 (chargement à une valeur k câblée).

La sortie des mémoires M1, M2 est aiguillée vers la sortie parallèle S (8 e.b) du circuit de mémoire tampon CMT par des registres R7, R8 et un multiplexeur MX5 adressé par l'élément binaire de poids faible du compteur CB1, et contrôlé par une bascule B1 qui reçoit le signal de validation Vk d'accès au circuit de sortie CAS associé à un commutateur CX. Le signal Vk (k = 1 à 4) est délivré par le circuit de commande CMC de ce commutateur et permet de sélectionner celui des circuits de mémoire CMT dont la mémoire tampon MT doit fournir l'échantillon acheminé à cet instant par le commutateur CX.

Pour l'injection du contrôle actif »ca«, l'adresse de liaison entrante ACE fournie par le circuit de commande CMC est comparée par le comparateur CP1 aux 5 e.b. de poids fort du compteur CB1. Le registre R9 d'adressage du multipleur MX2 reçoit deux éléments binaires de poids forts du compteur CB1 et un élément binaire fourni par une porte PE de type »ET« qui reçoit la sortie du comparateur CP1, un top d'injection »ti« fourni par le circuit de mémoire de commande CMC en synchronisation avec la voie concernée, et un signal de validation de circuit »Vck« (k = 1 à 4) fourni par ce même circuit CMC.

A l'entrée du circuit d'amplification de sortie CAS, un multiplexeur MX6 permet de recevoir soit la sortie S des 4 circuits de mémoire tampon CMT1 à CMT4 du commutateur, soit un code repos câblé RE qui est systématiquement émis sur les liaisons LS non connectées. La commande CRE d'injection de ce code est émise par le circuit de commande CMC et transmise par des bascules de synchronisation B2, B3 à l'entrée d'adressage du multiplexeur MX6.

En sortie du multiplexeur MX6, les échantillons sont distribués successivement à quatre registres R11 à à R14 sous le contrôle d'un registre à décalage à quatre positions R10 recevant des impulsions à la fréquence de 8 MHz et synchronisé avec les liaisons sortantes LS.

Les échantillons traversent enfin des registres intermédiaires R15 à R18, le circuit de conversion CPS, formé de quatre circuits CPS1 à CPS4 de type MICSPA capables d'effectuer les conversions parallèle/série, et quatre registres tampons de sortie R19 à R22.

L'entrée de circuits CPS1 à CPS4 est validée par une bascule B4 activée en synchronisation avec chaque voie temporelle sortante.

Le prélèvement de contrôle de sortie CS est réalisé par un multiplexeur MX7 dont l'adresse ACS de 5 e.b. est fournie par le circuit de commande CMC.

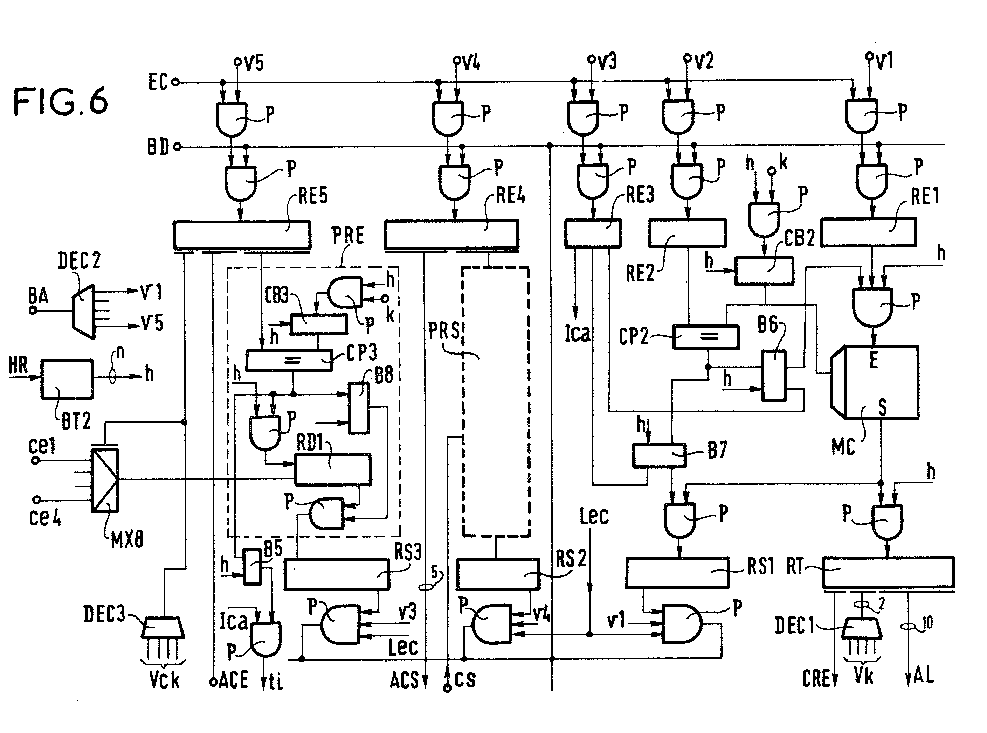

Le circuit de commande CMC est représenté sur la figure 6.

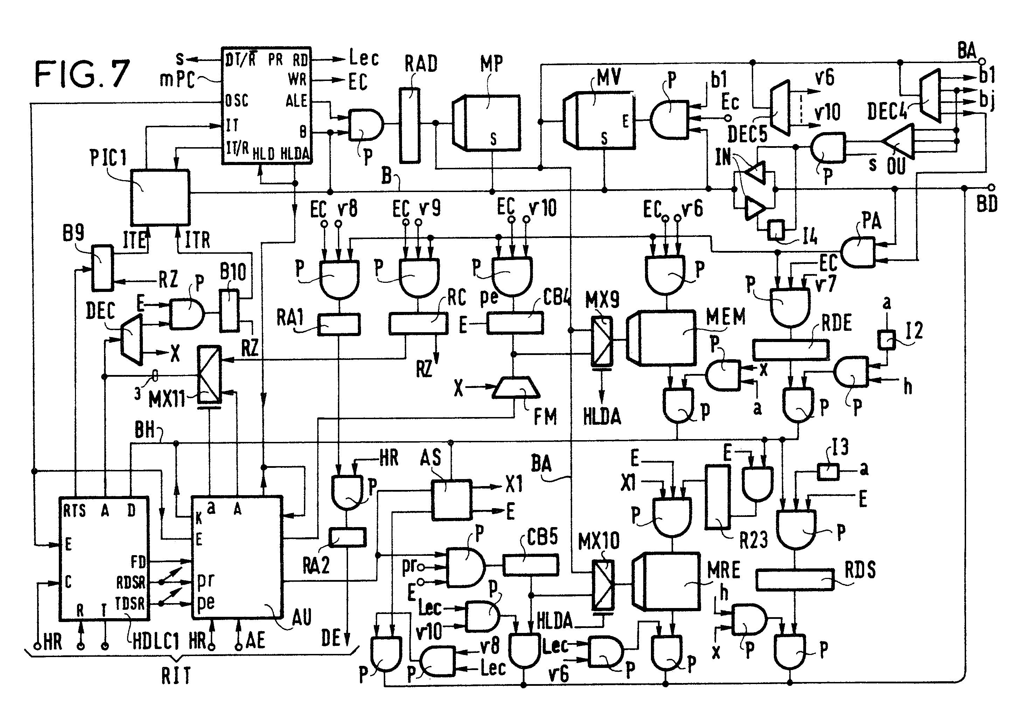

Ce circuit comporte essentiellement une mémoire de commande MC avec un registre tampon RT d'adressage des mémoires tampons, des circuits de commande de contrôle passif PRE, PRS et actif B5, et des registres d'entrée et de sortie RE1 à RE5, RS1 à RS3 reliés au bus de données BD du microprocesseur mPC du marqueur (voir aussi figure 7).

Ces circuits sont pilotés par un circuit de base de temps BT2 synchronisé avec le module MD de distribution de signaux du commutateur CX.

Les signaux de validation des transferts entre les registres et le bus BD sont fournis par décodage de 3 e.b. du bus d'adressage BA du microprocesseur mPC par le décodeur DEC2 qui fournit les signaux »v1« à »v5« et par les fils de commande d'écriture »EC« et de lecture »Lec« issus de ce même microprocesseur.

La mémoire de commande MC comporte 1024 mots de 13 e.b. permettant la commande des 32 x 32 voies portées par les 32 liaisons LS: 10 e.b. sont utilisés en sortie du registre RT pour l'adresse »AL« des mémoires tampons, 2 e.b. sont utilisés pour la validation »Vk« d'un circuit de mémoire tampon CMT par un décodeur DEC1 et un e.b. pour la commande »CRE« d'injection du code repos.

La description qui suit précise les fonctions réalisées sur ordre du microprocesseur, et le principe de réalisation des circuits.

L'écriture en mémoire MC s'effectue par:
- chargement du registre RE1 (commandes v1 et Ec),
- chargement du registre RE2 qui contient l'adresse du mot à écrire (commandes v2 et EC),
- écriture: la mémoire est adressée par le compteur CB2, et un comparateur CP2 active une bascule B6 qui autorise l'écriture lorsque le compteur atteint la valeur inscrite dans le registre RE2.

La lecture de la mémoire MC par le marqueur permettant le test du circuit CMC par comparaison avec une image de la mémoire MC inscrite en mémoire du marqueur, s'effectue par:
- chargement de l'adresse (commandes v2 et EC),
- lecture de la mémoire de chargement du registre RS1, validé par le comparateur CP2 et une bascule B7,
- transfert du contenu du registre RS1 sur le bus BD (v1 et Lec)

Le prélèvement en entrée s'effectue par:
- chargement d'une adresse de 12 e.b. dans le registre RE5 (commandes v5 et EC),
   - 2 e.b. adressent un multiplexeur MX8 recevant les échantillons des circuits CMT (ce1 à ce4),
   - 5 e.b. fournissent l'adresse »ACE«, c'est-à-dire le numéro de liaison LE, 5 e.b. fournissent l'adresse de voie; la synchronisation sur la voie à contrôler est réalisée dans le circuit PRE par comparaison par le comparateur CP3 de l'adresse avec le contenu d'un compteur CB3 synchronisé par la base de temps. L'échantillon est chargé au rythme de la liaison LE, soit 2 MHz, dans un registre à décalage RD1. Le transfert dans le registre de sortie RS3 est piloté par une bascule B8 activée en fin d'échantillon.

Le prélèvement en sortie s'effectue selon un principe identique, utilisant les registres RE4 et RS2 et un circuit PRS analogue à PRE.

Le contrôle actif s'effectue par:
- chargement du registre RES, le signal de validation de circuit VCk est fourni par décodage par le décodeur DEC3 des 2 e.b. d'adresse de circuit CMT,
- chargement du registre RE3. Ce registre est un registre de commande qui fournit la commande d'injection »Ica« du code »ca«, des commandes de validation, de lecture et d'écriture mémoire par les bascules B6, B7 et des commandes de remise à zéro. Une bascule B5 validée par le signal de sortie du comparateur CP3 délivre un top »ti« lorsque le signal »Ica« est fourni.

Le marqueur MQ1 et l'accès aux liaisons point à point du réseau RIT sont représentés sur la figure 7.

Le marqueur MQ1 comporte un microprocesseur mPC; par exemple un circuit 8086 associé à un circuit d'horloge 8284 fabriqués par la société INTEL. Un bus interne B alimente le bus d'adresse BA par un registre d'adresse RAD, et un bus de données BD à travers une interface directionnelle IN contrôlée par le microprocesseur mPC (signal directionnel »s« issu de la sortie DT/R du microprocesseur, et adresse d'entrée-sortie reçues par une porte »OU« et un décodeur DEC4).

Le microprocesseur mPC est associé à une mémoire programme MP, par exemple de type »reprom« et une mémoire vive de données MV.

L'organe d'accès aux liaisons du réseau RIT comporte un circuit HDLC1 de gestion des échanges en procédure HDLC, un automate de pilotage AU et des mémoires tampons intermédiaires d'émission MEM et de réception MRE.

Le circuit HDLC1 est par exemple de type 6854 fabriqué par la société MOTOROLA.

L'automate AU est formé de manière connue par une logique en mémoire morte associée à un registre d'adresse qui reçoit les informations d'entrée, et à un registre de sortie, les deux registres étant pilotés par des signaux d'horloge fournis à l'entrée E par la sortie OSC du microprocesseur qui pilote également le circuit HDLC1. En entrée de l'organe d'accès, le bus BD est validé par une porte d'accès PA contrôlée par une adresse »bj« issue du décodeur DEC4.

Les accès sont analogues à ceux que l'on a décrit pour le circuit de mémoire de commande CMC:
- utilisation des commandes WR et RD (fils EC et Lec) du microprocesseur, et d'un signal de sélection (v6 à v10) obtenu par décodage d'adresse par le décodeurDEC5;
- adressage multiplexé des mémoires MEM et MRE par le microprocesseur via le bus BA, par l'automate AU via les compteurs CB4, CBS, et les multiplexeurs MX9 et MX10 suivant le fonctionnement décrit plus loin.
- utilisation des circuits complémentaires suivants:
   - registre de données entrantes RDE connecté entre la porte PA et le bus BH du circuit HDLC1,
   - registre de données sortantes RDS entre les bus BH et BD,
   - registre tampon d'entrée R23 de la mémoire MRE,
   - registre de commande RC contenant des commandes de remises à zéro RZ des registres internes du circuit HDLC1 (entrée A correspondant au commandes R/W, RSO, RS1 du circuit 6854) fournies par l'intermédiaire d'un multiplexeur MX11 piloté par la sortie a de l'automate AU, le circuit HDLC1 peut ainsi être piloté soit par le microprocesseur, soit par l'automate;
   - registres d'appel RA1, RA2 pour avoir accès à une liaison du réseau RIT, le microprocesseur charge le registre RA1, les signaux d'horloge »HR« de la liaison RIT assurent le transfert de l'information dans le registre RA2 et le marquage du fil DE, l'autorisation d'émission en retour »AE« est reçue par l'automate AU;
   - circuit de reconnaissance d'adresse d'unité de commande AS, cette adresse qui sert à identifier les unités de commande reliées aux liaisons du réseau RIT, est câblée dans ce circuit, elle est comparée, en réception, à l'adresse interne dans les messages, en émission, elle est intégrée au message;
- un circuit programmable PIC1 de gestion des interruptions du microprocesseur permet de prendre en compte les demandes de service de l'automate en émission et en réception. On utilise par exemple le circuit 8259 fabriqué par la société INTEL. En émission un signal d'interruption »ITE« est fourni directement par la sortie RTS du circuit HDLC1 via une bascule B9. En réception un signal d'interruption »ITR« est fourni par l'automate AU qui active une bascule B10. Ces bascules sont remises à zéro par le signal »RZ« fourni par le microprocesseur via le registre RC.

Le fonctionnement des circuits est le suivant:

En cas de demande d'émission par le microprocesseur mPC
- chargement de la mémoire MEM par le microprocesseur mPC, la mémoire peut contenir un message complet de n octets, l'adresse du dernier octet est chargée dans le compteur CB4,
- la mémoire est lue par le circuit HDLC1 sous contrôle de l'automate,
- le compteur CB4 est activé en mode dégressif sous le contrôle du signal prêt à émettre »pe« fourni par le circuit HDLC1 indiquant que son registre d'émission est vide,
- l'accès au bus BH en sortie de la mémoire est validé par l'automate dont les sorties a et A fournissent un code X de commande d'écriture du registre d'émission du circuit HDLC1,

lorsque le compteur est revenu à zéro, un décodeur de fin de message FM avertit l'automate, et celui-ci pilote le circuit HDLC1 pour l'émission des codes de fin de message.

En cas de réception de messages sur une liaison du réseau RIT, la détection d'un début de message maroue la sortie FD du circuit HDLC1 et prévient l'automate, celui-ci ordonne la lecture du registre de réception du circuit HDLC1, et le circuit AS reconnait l'adresse de marqueur.

Pour chaque octet reçu, le circuit HDLC1 active sa sortie RDSR qui fournit un signal prêt à recevoir »pr«. Le signal »pr« valide l'entrée d'horloge du compteur CB5. L'automate commande la lecture du registre de réception du circuit HDLC1 et l'écriture de la mémoire MRE par un signal »X1«. L'automate fait appel au microprocesseur mPC. Plusieurs messages peuvent être mis en file d'attente dans la mémoire MRE.

Le microprocesseur vient lire le compteur CB5 et chacun des messages contenus dans la mémoire.

Chaque message donne lieu en retour à un message d'acquittement.

Les fonctions réalisées par le marqueur sont essentiellement des fonctions de connexion, de déconnexion et de contrôle.

Le marqueur exécute des ordres fournis par l'unité de commande UC à laquelle il est affecté. Certians ordres donnent lieu à un message de compte-rendu.

Les fonctions de connexion donnent lieu à l'établissement d'une connexion à sens unique, c'est-à-dire entre une voie d'une entrée LE et une voie d'une sortie LS. Chaque connexion peut être associée à trois sortes de contrôle, un contrôle actif de la connexion (élément binaire C du message), un test de repos de la liaison LS avant connexion (élément binaire R), un test de conformité de la connexion préexistante (élément binaire T).

La partie information du message comporte 7 octets:
- 1 octet de fonction 00001 TRC,
- 3 adresses de 2 octets (adresse d'entrée, adresse de sortie, ancienne adresse d'entrée pour test de conformité).

Les fonctions de déconnexion sont la déconnexion simple, avec ou sans test de conformité et la déconnexion globale de plusieurs voies d'une même liaison sortante LS.

Le message comporte 6 octets:
- code de fonction (1 octet),
- adresse de la liaison LS concernée (1 octet),
- 32 e.b. affectés chacun à l'une des 32 voies, indiquant les voies à déconnecter.

Les contrôles comprennent un contrôle actif, un contrôle passif, un contrôle par relecture d'une connexion dans la mémoire de commande MC.

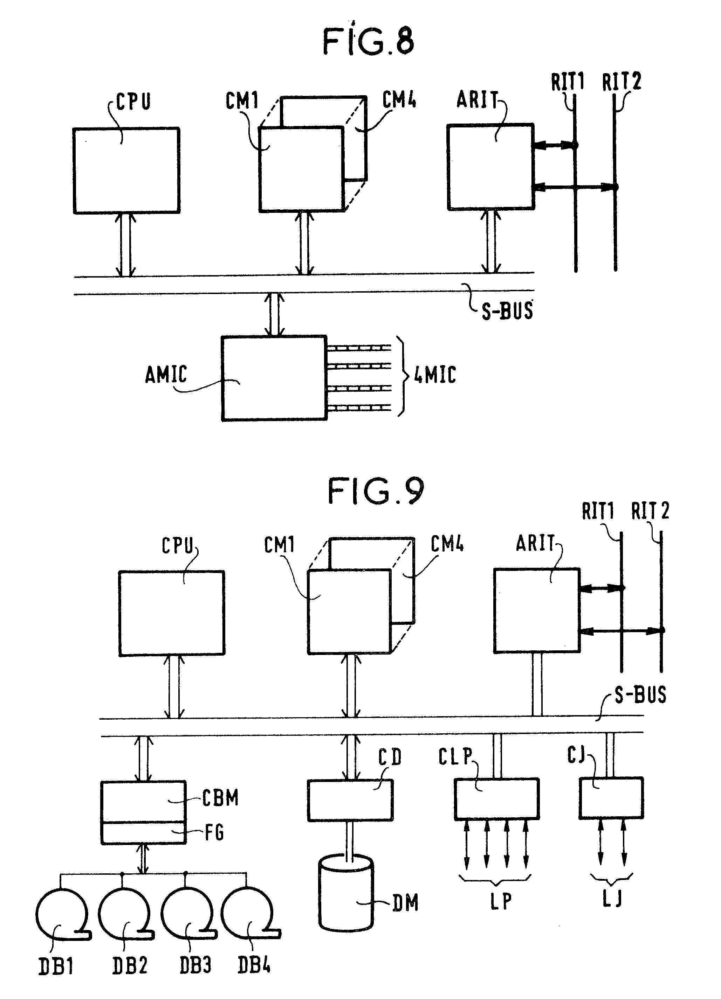

Une unité de commande UC est représentée schématiquement sur la figure 8.

Une unité UC comporte les organes suivants, reliés à un bus système S-BUS.
- Une carte processeur CPU
- Des cartes mémoires telles CM1 à CM4
- Une carte d'interface ARIT avec les liaisons RIT1-RIT2
- Une carte d'interface AMIC avec des liaisons MIC qui desservent par exemple des unités de terminaux téléphoniques.

Les cartes CPU, ARIT, et le bus S-BUS sont décrits plus loin, ainsi que le distributeur DR1 qui gère l'accès à une liaison RIT1.

Une unité de commande de périphérique UCP représentée schématiquement sur la figure 9 a une architecture analogue à celle des unités de commande UC1, et elle comporte des coupleurs de périphériques tels que:
- coupleur de bandes magnétiques CBM associé à une logique de formatage FG qui pilote quatre dérouleurs DB1 à DB4,
- coupleur CD de disque DM,
- coupleur programmable de liaisons numériques CLP gérant par exemple quatre liaisons LP exploitables séparément en mode synchrone ou asynchrone,
- un coupleur CJ de liaisons LJ de type LX25 défini par le CCITT.

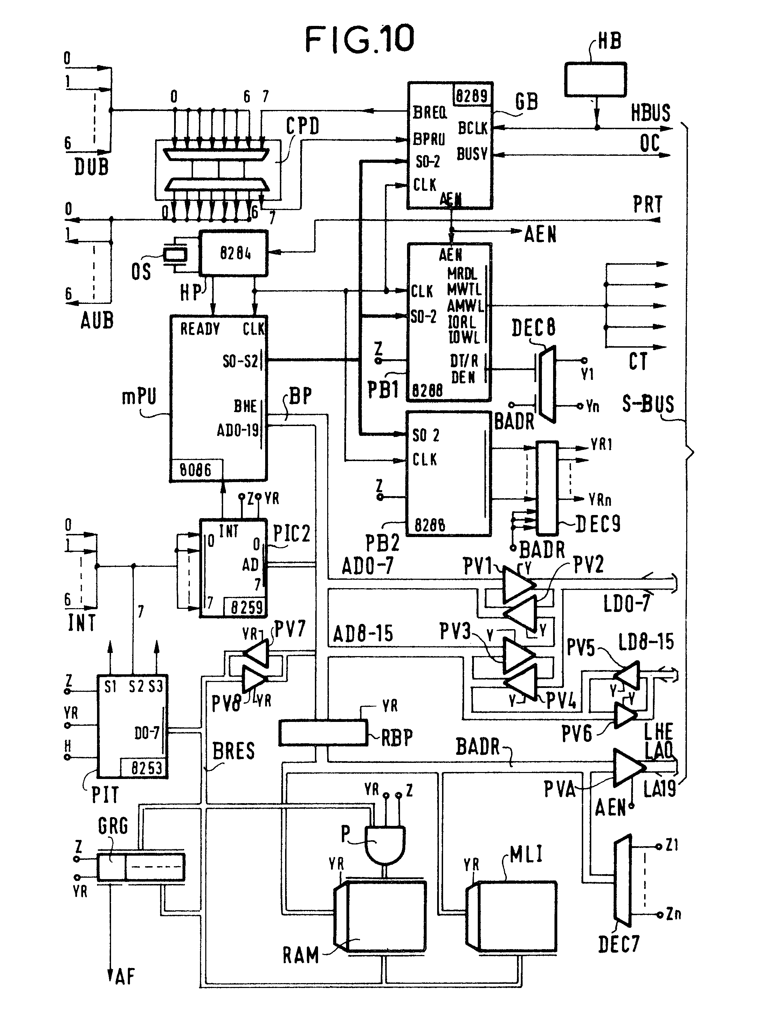

La carte processeur CPU et le bus système S-BUS sont détaillés sur la figure 10.

Un microprocesseur mPU a accès au bus système S-BUS et à un bus résident BRES pour la gestion des ressources implantées sur la carte CPU: Mémoire morte MLI contenant le logiciel d'initialisation, mémoire vive RAM, registres, temporisation.

Dans cette application, le microprocesseur mPU (figure 10) est constitué par un circuit 8086 de la société INTEL. On utilise également des circuits INTEL associés qui sont cités plus loin et repérés sur la figure, naturellement les circuits sont indiqués à simple titre d'exemple. Pour une appréciation claire de l'état de la technique, on pourra se reporter au document de la société INTEL »The 8086 family user's manual octobre 1979«, en particulier le chapitre concernant le bus système »Multibus«.

Les interfaces du bus processeur BP (Sorties ADO à AD19 du circuit 8086) sont les suivantes:
- Un registre de bus RBP donne accès à un bus d'adresse BADR. Ce bus est relié aux entrées d'adressage des mémoire vive RAM et morte MLI, à un décodeur DEC7 qui fournit les adresses Z, telles Z1 à Zn, de validation des circuits de la carte, et à un groupe de portes de validation à sorties trois états PVA qui alimentent les lignes d'adresses LAO-LA19 du bus S-BUS.
- Des groupes de portes à sortie trois états PV1 à PV6 permettant l'accès à double sens des lignes de données LDO à LD15 du bus S-BUS.
- PV1- PV2 accès entre ADO-7 et LDO-7
- PV3- PV4 accès entre AD8-15 et LDO-7
- PV5 - PV6 accès entre AD8-15 et LD8 -15

L'indication de l'octet (poids fort ou poids faible des données) émis ou reçu par les lignes LDO-7 est fournie par la sortie BHE du processeur, reliée au registre RBP et à la ligne LHE de S-BUS.
- L'accès au bus de données internes à seize fils (BRES) est réalisé par des groupes de portes trois états PV7, PV8.

Ce bus BRES donne accès aux circuits suivants:
- Mémoires RAM (entrée/sortie) et MLI (sortie)
- Groupe de registres GRG (entrées, et certaines en entrée/sortie notamment via un fil AF vers des afficheurs non représentés)
- Un compteur prgrammable triple PIT: par exemple un circuit type 8253 dont l'utilisation est la suivante:
   - Sortie S1: contrôle de durée d'utilisation du S-BUS, provoque la libération en cas de dépassement.
   - Sortie S2: crée les interruptions pour le marquage de l'heure.
   - Sortie S3: compteur utilisé en compteur de durée.

Les interruptions sont gérées par un circuit programmable PIC2 par exemple un circuit type 8259 qui reçoit les interruptions INT provenant du compteur PIT et des coupleurs (lignes INTO à INT6). Le circuit PIC2 et des circuits analogues situés dans les coupleurs fonctionnent en mode maître-esclave, le circuit PIC2 étant maître. Ce circuit est relié directement aux fils ADO à AD7 du bus BP.

Pour la gestion des bus et des circuits de la carte processeur CPU:
- Les sorties SO à S2 des liaisons de commande du microprocesseur mPU sont reliées à des circuits pilotes de bus PB1 et PB2 (type 8288) et à un circuit GB de gestion de l'accès au S-BUS (type 8289). L'horloge des circuits mPU, PB1, PB2, GB est fournie par un oscillateur OS et un circuit d'horloge HP (type 8284). Ce circuit reçoit le signal »prêt à transmettre« PRT des coupleurs reliés au bus S BUS, et le synchronise avec l'horloge pour alimenter l'entrée »READY« du circuit mPU (8086). La sortie de validation »ALN« du circuit GB est reliée au circuit PB1 et aux portes PVA.

Le circuit PB1 ici de type 8288, fournit:
- les commandes d'écriture et lecture en modes accès mémoire ou entrée/sortie pour le bus S-BUS via les fils CT,
- les commandes Y1 à Yn des groupes de portes PV1 à PV6 d'accès au bus S-BUS: les commandes Y sont données en sortie d'un décodeur DEC8 qui reçoit les sorties DT/R et DEN du circuit PB1, et le fil de poids faible du bus BADR.

Le circuit PB2 ici également de type 8288 fournit les commandes de validation internes YR, telles YR1 à YRn vers les circuits PIT, PIC2, PV7, PV8, RBP, RAM, MLI, GRG par l'intermédiaire d'un décodeur DEC9.

L'utilisation du bus S-BUS est partagée entre le microprocesseur mPU et des coupleurs, comme on le verra plus loin, par exemple pour un accès direct à la mémoire (mode »DMA«). Les signaux de gestion du bus S-BUS sont les suivants:
- Demandes DUB et autorisation AUB d'utilisation du bus: les liaisons sont en point à point sur les coupleurs et sont gérées par un circuit de codage à priorité et décodage CPD de la carte CPU. Ce circuit CPD reçoit sur ses entrées/sorties de priorité la plus grande (n° 7) les fils qui concernent le processeur fils »BREQ« et »BPRU« du circuit GB.
- L'horloge »H-BUS« du S-BUS est fournie par une horloge HB qui alimente aussi l'entrée BCLK du circuit GB.
- Le fil OC indiquant l'état d'occupation du bus est relié à la borne BUSY du circuit GB.

Dens cette application l'art connu a été utilisé puis adapté de manière à obtenir une grande rapidité et une simplicité de gestion dans les échanges interprocesseurs, en particulier en gérant les coupleurs comme des espaces mémoire et en traitant les informations de mise ne relation et d'interruptions en mode point à point.

- Les coupleurs AMIC de liaisons MIC comportent des mémoires d'échange accessible pour le microprocesseur mPU.
- Les coupleurs ARIT des liaisons RIT1, RIT2 accède aux mémoires du système en mode DMA.

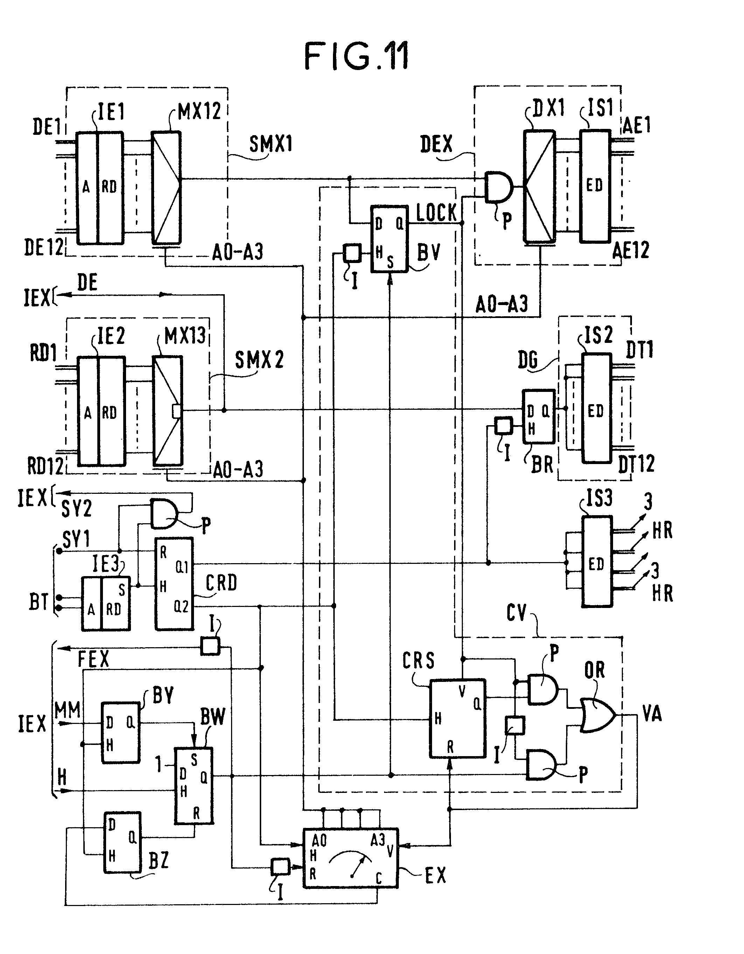

L'un des distributeurs de liaisons point à point DR1, DR2 est représenté schématiquement sur la figure 11.

Dans cette application de l'invention on utilise des distributeurs modulaires décrit ci-après.

Un module de distribution permet de raccorder douze unités UCB, UCP ou marqueurs MQ. Chaque unité ou marqueur est relié à chaque liaison RIT1, RIT2 du réseau RIT par cinq paires de fils ayant les fonctions suivantes:
- DE: demande d'accès au réseau dupliqué RIT1, RIT2
- AE: autorisation d'accès,
- RD: données à transmettre (trajet station n vers les liaisons RIT1, RIT2 du réseau RIT.
- DT: données à transmettre (trajet RIT1, RIT2 vers station destinataire),
- HR: horloge de synchronisation.

Le module de distribution comporte des interfaces d'entrées IE1 à IE3 formées d'un adaptateur A et d'un récepteur différentiel RD, des interfaces de sortie IS1 à IS3 à émetteurs différentiels ED, et des liaisons d'extension IEX multifilaires permettant de relier les modules entre eux.

Les interfaces d'entrées IE1, IE2, IE3 reçoivent respectivement les paires de liaisons de demandes d'accès DE1 à DE12 et de transmissions de données RD1 à RD12 pour douze unités ou marqueurs et des signaux d'une horloge à 4 MHz émise par la base de temps générale BT de l'ensemble.

Les interfaces de sortie IS1, IS2 desservent les liaisons d'autorisation d'accès AE1 à AE12 et de transmission de données DT1 à DT12. L'interface IS3 alimente quatre paires de fils de distribution d'horloge HR qui desservent chacune trois stations en parallèle. Les liaisons DE1 à DE12, AE1 à AE12, RD1 à RD12 sont validées séquentiellement par un compteur explorateur EX qui adresse des multiplexeurs MX12 et MX13 et un démultiplexeur DX1 (adresses AO à A3).

Les données »DT« et l'horloge »HR« sont émises simultanément vers toutes les unités UC, UCP, MQ. Le signal »HR« a une fréquence de 1 MHz obtenue par division des signaux de l'horloge de base BT par un compteur CRD. L'horloge de base émet également un signal de synchronisation de trame SY1 transmis à l'entrée de remise à zéro du compteur CRD. Le signal SY1 du premier module est renvoyé au travers d'une porte P et via le fil SY2 de liaison IEX vers l'entrée SY1 des autres modules en série.

La prise de la liaison par une unité UC, UCP ou MQ est mémorisée par une bascule de validation BV qui délivre un signal LOCK lequel arrête l'explorateur EX par l'intermédiaire du compteur CRS et ouvre l'accès au démultiplexeur DX1 qui donne l'autorisation d'émission AE.

Les données reçues des fils RD sont régénérés par une bascule BR. Les données reçues par un module peuvent être émises vers une unité raccordée à un module quelconque. Le multiplexeur MX13 a une sortie 3 états multiplée via le fil DE de liaison IEX avec celle des autres modules.

La durée de prise d'une liaison du réseau par une unité ou marqueur est limitée à 10 ms par le compteur de surveillance CRS qui autorise par un signal VA, et via une logique câblée à porte P, I, OR, la progression de l'explorateur Ex dans le cas de dépassement de durée.

Une sortie Q2 du compteur CRD fournit des signaux d'horloge aux circuits EX, CRS et BV, en opposition de phase pour ce dernier. Les signaux d'horloge d'émission fournis par la sortie Q1 du compteur CRD activent via un inverseur de phase 1 la bascule de régénération Br, à la fréquence de 1 MHz.

Le fonctionnement d'un distributeur dupliqué DR1, DR2 est le suivant:
- Mise en marche: le premier module du distributeur reçoit un signal MM sur une bascule BY pilotée par la sortie Q2 du compteur CRD. La sortie Q de la bascule BY positionne une bascule d'autorisation BW qui libère l'explorateur EX.
   - Prise en compte d'une demande d'émission DE1: lorsque l'explorateur Ex adresse l'entrée correspondante de l'interface IE1, la bascule BV délivre le signal LOCK qui a trois actions.
   - Ouverture de la porte P d'accès au démultiplexeur DX1 et émission de l'autorisation AE1.
   - Autorisation de progression du compteur de surveillance CRS.
   - Blocage de l'explorateur EX (fermeture de la porte P).
- Fin d'émission: suppression du signal DE1 avant 10 ms, qui entraîne la remise à zéro des signaux AE1 et LOCK et du compteur CRS, et le déblocage de l'explorateur EX.
- Fin de temporisation avant une fin d'émission: la sortie du compteur CRS ouvre la porte P qui débloque l'explorateur EX.
- Fin d'exploration: la sortie de fin de comptage C de l'explorateur EX est reliée à l'entrée D d'une bascule BZ qui commande la remise à zéro de la bascule BW. Celle-ci commande, par l'intermédiaire du fil FEX de liaison IEX l'entrée d'horloge H de la bascule BW du module suivant. En fin d'exploration de tous les modules, le cycle recommence.

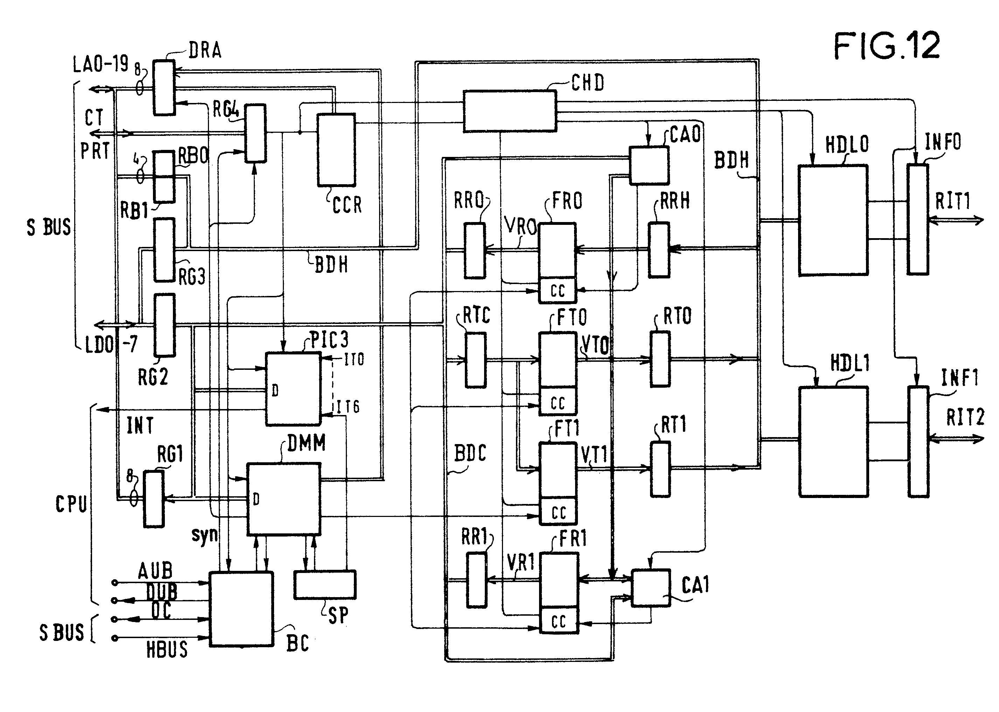

Le coupleur ARIT de liaison aux réseaux RIT décrit à titre d'exemple figure 12 est un dispositif de dialogue interprocesseurs. Il occupe une carte de circuits imprimés, logée dans l'alvéole du processeur. Ce dispositif est relié d'une part au bus S-BUS du processeur pour un échange de messages par procédure d'accès direct à la mémoire et d'autre part aux liaisons RIT1, RIT2 du réseau de dialogue RIT pour un dialogue en procédure HDLC, du même type que celui qui a été décrit plus haut dans le cas des marqueurs.

Le dispositif suivant l'invention permet un accès simultané aux deux liaisons RIT1 et RIT2 du réseau RIT et des opérations simultanées de transfert par des circuits d'accès direct en mémoire DMM, et de gestion des échanges HDLO et HDL1, définis plus loin.

Pour cela le dispositif comporte quatre voies internes, et à chaque voie est associé un registre de stockage de type FIFO d'une capacité de 64 octets tel le registre FRO à la voie de réception VRO associée à la liaison RIT1, le registre FR1 à la voie de réception VR1 associée à la liaison RIT2, le registre FTO à la voie d'émission VTO assurée à la liaison RIT1 et le registre FT1 à la voie d'émission VT1 aussurée à la liaison RIT2.

Ces voies accèdent aux circuits d'échanges avec le processeur, à un bus interne BDC, et aux circuits HDLO, HDL1 par un bus BDH.

Les transferts entre chaque registre FR ou FT et les bus BDC, BDH sont synchronisés à l'aide de registre tampons d'émission RTC, RTO, RT1 et réception RRH, RRO, RR1.

En émission et réception, on a une procédure générale d'échange.

En émission, le processeur active les circuits DMM et HDLO et fournit le signal »DEO« de demande de prise d'une liaison tel RIT1 du réseau RIT. Après réponse »AEO« du RIT1 le circuit DMM commence le transfert depuis la mémoire du processeur vers le registre FTO de la voie VTO par paquets de seize octets, jusqu'à remplissage du registre. Le circuit HDLO commence la transmission dès que le premier octet est disponible, jusqu'à ce que le circuit DMM indique la fin de message et que le registre soit vide. Le circuit HDLO termine le message. Le réseau RIT1 est libéré et une interruption est émise vers le processeur qui peut lire le registre d'état du circuit HDLO.

Les différentes interruptions sont gérées sur la carte par un circuit programmable PIC3, par exemple le circuit 8259A fabriqué par la société INTEL. Ce circuit est piloté par le circuit 8259A du calculateur en mode maître-esclave. Le dialogue a lieu soit par interruption »INT« et accusé de réception »INTA«, soit par exploration des circuits esclaves par le circuit maître.

En réception, le processeur active le circuit DMM et le récepteur du circuit HDLO. Après détection d'un »FLAG«, l'octet qui suit est comparé à l'adresse du dispositif. S'il y a concordance, seize octets sont chargés dans le registre de la voie VRO, et une demande de service est émise vers le circuit DMM. Une nouvelle demande est émise à chaque paquet de seize octets, jusqu'à la fin du message »FLAG« de fin, lorsque le registre FRO est vide. Le récepteur est désactivé et une interruption est émise vers le microprocesseur pour lecture du registre d'état de circuit HDLO, et du registre du circuit DMM indiquant la longueur du message et son adresse en mémoire.

Le processeur supervise l'accès DMM pour le transfert des paquets de 16 octets, mais le circuit DMM gère seul le transfert de chaque paquet, et pendant ces transferts le bus S-BUS est piloté par lui.

Le dispositif est considéré par le processeur comme un espace mémoire et les seules commandes utilisées, mise à part la gestion de l'accès DMM sont les commandes de lecture Lec et d'écriture EC et la réponse du dispositif adressé c'est-à-dire un signal »prêt« émis sur le fil PRT du S-BUS défini plus haut.

Les circuits du dispositif mentionné ci-dessus sont une interface avec le bus S-BUS pour des lignes d'adresse LAO à LA19, des lignes de données LDO à LD7 et des lignes de commande de transfert CT et PRT et de commande de contrôle du bus S-BUS. Les huit lignes d'adresse de poids faibles (LAO à LA7) sont reliées à un circuit d'accès bidirectionnel ou »driver« DRA. Pendant les transferts vers la mémoire du microprocesseur en mode d'accès direct, ces lignes sont alimentées par le circuit DMM. Les lignes LA8 à LA15, sont alimentées en mode d'accès direct par le circuit DMM à travers un registre de sortie RG1. En entrée ces lignes sont reliées aux circuits destinataires.

Les lignes LA16 à LA19, sont alimentées par deux registres d'adresse de bloc RBO, RB1 associés chacun à l'un des réseaux RIT. Les registres sont chargés par le processeur par l'intermédiaire du bus de données et indiquent le bloc de 64 Koctets de la mémoire dans lequel doit être stocké le message reçu. En émission, le circuit DMM lit le message dans le bloc dont l'adresse de base est égale à zéro. L'utilisation interne des lignes par le dispositif est décrite plus loin.

Seules huit des lignes de données (LDO à LD7) sont utilisées. Elles sont reliées par des registres bidirectionnels RG2 et RG3 aux bus internes BDC et BDH. Le sens de transfert est commandé par le circuit DMM.

Les lignes de commande de transfert CT et PRT, soit en entrée les commandes de lecture/écriture sont relayées par un registre RG4 qui permet leur synchronisation par un signal »syn« émis par un circuit de contrôle de bus BC.

En sortie les signaux sont fournis par le circuit DMM. Le signal »PRT« est également émis par le circuit BC à partir du signal »syn«. Les lignes de commande de contrôle du bus S-BUS par le circuit BC comprennent les fils permettant la prise et la libération du bus qui sont le fil HBUS d'horloge de synchronisation du bus, le fil DUB de demande d'utilisation du bus par le circuit DMM et le fil AUB d'autorisation d'utilisation du bus, celle-ci étant donnée par le processeur.

Le circuit BC effectue un simple relayage de ces signaux et leur synchronisation avec l'horloge du bus.

Les circuits du dispositif comprennent aussi un circuit de contrôle CCR.

Ce circuit décode les informations des lignes d'adresse LA et CT pour la commande des circuits du dispositif.

Le processeur utilise pour cette commande 64 mots mémoire, dans un bloc de 16 Koctets identifié par câblage sur le connecteur de la carte du dispositif. Ces 64 mots sont adressés par les 6 e.b. de poids faibles des lignes LA. Les 4 e.b. LAO à LA3 définissent la commande et les e.b. LA4- LA5 le circuit adressé.

Le circuit d'accès direct DMM à la mémoire est ici un circuit programmable 8257 fabriqué par INTEL. Ce circuit peut contrôler quatre voies différentes, et il est utilisé pour le transfert de paquets de un à seize octets.

A ce circuit sont associés un registre tampon RTC d'émission vers les registres FTO, FT1 des voies VTO et VT1, les registres tampons de réception RRO et RR1 reliés aux registres FRO, FR1 des voies VRO et VR1, et un circuit de supervision SP de la durée de prise du bus S-BUS.

Le circuit SP comporte des compteurs qui mesurent la durée de l'accès mémoire, contrôlée par la présence du signal »PRT«, et le nombre de caractères transmis, qui ne doit pas dépasser seize avant libération du bus. En cas de dépassement, le circuit SP émet une demande d'interruption vers le circuit PIC3. Pour les transferts émission et réception les registres FRO, FR1, FTO, FT1 des quatres voies comportent chacun un circuit de contrôle CC formé d'un compteur qui délivre les informations registre vide, seize caractères chargés, registre plein, nécessaires pour initialiser et stopper les transferts.

Le transfert vers le processeur en mode d'accès direct, c'est-à-dire l'écriture en mémoire, est initialisé par le circuit DMM qui effectue une demande de données par la sortie D-REO du boîtier 8257. Pour la voie VRO, par exemple, le transfert entre FRO et DMM débute lorsque le circuit CC indique que le registre est plein. Le circuit DMM pilote le transfert jusqu'à réception du signal »registre vide« ou du signal »fin de message« activé lorsque le circuit HDLO à détecté le caractère indicatif de fin »FLAG«.

Le transfert depuis le processeur en mode d'accès direct s'effectue par initialisation par le circuit DMM, et transfert jusqu'à remplissage du registre FTO ou jusqu'au signal de fin de transfert donné cette fois par le circuit DMM.

Les interruptions gérées par le circuit PIC3 sont respectivement pour les voies associées aux réseaux RIT1 et RIT2
- l'interruption de fin de transfert de paquet (ITO)(IT3),
- l'interruption de fin de réception de message (IT1 )(IT4)
- et l'interruption de fin d'émission de message (IT2)(IT5); pour le circuit SP c'est l'interruption den cas de dépassement de durée d'utilisation du bus (IT6).

Les circuits d'émission-réception HDLO-HDL1 sont de même type que le circuit HDLC1, ils sont reliés à leur réseau RIT par une interface INFO, INF1 de conversion électrique et de relayage des signaux de demande et d'autorisation d'émission AE et DE. Les commandes de pilotage des circuits HDL sont fournies par un circuit de contrôle CHD, relié aux circuits CCR, RG4, CA, HDL, INF. Le circuit CHD comporte, pour chaque circuit HDL un multiplexeur d'aiguillage des commandes de ses registres internes qui a des fonctions analogues à celles du multiplexeur MX11 (figure 7). Le circuit CHD peut être réalisé sous forme d'une logique câblée, ou sous-forme d'une mémoire de type PROM avec des fonctions comparables à celles de l'automate décrit précédemment.

Le circuit CHD est également relié à deux circuits CAO et CA1 de reconnaissance d'adresse d'unités ou de marqueurs qui sont chargés via le bus BDC par un ordre du microprocesseur mPU et reçoivent l'adresse contenue dans le message sur la voie réception en sortie du tampon RRH. Le fonctionnement des échanges entre circuits HDL et registres FT est le suivant, en cas d'émission sur le réseau RIT.

Après la prise d'une liaison telle RIT1 et le positionnement en émission des circuits DMM et HDLO par le processeur, le transfert d'un caractère entre registre FTO et circuit HDLO par l'intermédiaire du tampon RTO est déclenché lorsque le circuit CC du registre FTO indique qu'un caractère est disponible en sortie de ce registre FTO ou que le circuit HDLO est prêt à émettre ce qui est indiqué par l'activation de sa sortie TDSR.

Les caractères sont transmis sous le contrôle du circuit CHD jusqu'à la fin du message, indiquée par les signaux »fin de message« donné par DMM et »registre vide« donné par le circuit CC concerné.

En cas de réception sur le réseau RIT après positionnement des circuits HDLO et DMM, le transfert du premier caractère est déclenché lorsque le circuit HDLO est prêt à recevoir ce qui est indiqué par l'activation de sa sortie RDSR, et que le tampon registre RRH est disponible, la voie de réception VR n'étant pas active.

Le premier caractère est comparé à l'adresse chargée par le processeur dans le circuit de reconnaissance CA, pour reconnaissance de l'unité ou marqueur destinataire avant transfert des caractères suivants.

Si la comparaison n'est pas validée, une seconde comparaison est faite avec un caractère fixe, le même pour toutes les unités ou marqueurs (par exemple FF en hexadécimal). Cette procédure permet à un processeur de diffuser un message vers toutes les unités ou marqueurs raccordés au réseau RIT.

D'autre part la présence de deux circuits de comparaison CAO-CA1 permet d'avoir une adresse d'unité ou de marqueur différente pour les adresses RIT.

La procédure de fin de message est déclenchée lorsque le circuit HDLO détecte le signal »FLAG« de fin.

Comme on l'a indiqué plus haut, les circuits du dispositif sont pilotés par le processeur à l'aide des informations suivantes:
- Adresses de 0 à 64 données par LAO à LA5
- Signaux de lecture/écriture via les fils CT
- Données sur les fils LDO à LD7.

Les principales commandes utilisées sont indiquées à titre d'exemple pour les circuits PIC3 c'est une utilisation normale des commandes CT reliées aux entrées T/W du circuit 8259A pour la lecture ou l'écriture des registres internes du circuit.
Pour les registres RB1, RBO de base, le chargement des informations »DO à D3« s'effectue par une commande d'écriture.
Pour les adresses d'unité ou de marqueurs au niveau de circuits CAO, CA1 le chargement des informations »DO à D7« s'effectue par une commande décriture.
Pour le circuit d'accès DMM, l'écriture et la lecture de l'adresse mémoire pour l'accès est constituée de deux octets consécutifs qui sont lus ou écrits sur les fils D0 à D7.
L'écriture ou la lecture de l'index qui permet le comptage des octets transmis est de seize e.b. ou deux octets consécutifs.

Ces commandes sont réalisées séparément pour chacune des quatre voies traitées par le circuit DMM.

Le processeur commande également les registres communs aux quatre voies pour la lecture du registre d'état, et l'écriture du registre de commande, du masque etc. Pour les circuits HDLO-HDL1, on a écriture séparée des registres de contrôle, et lecture séparée des deux registres d'état.

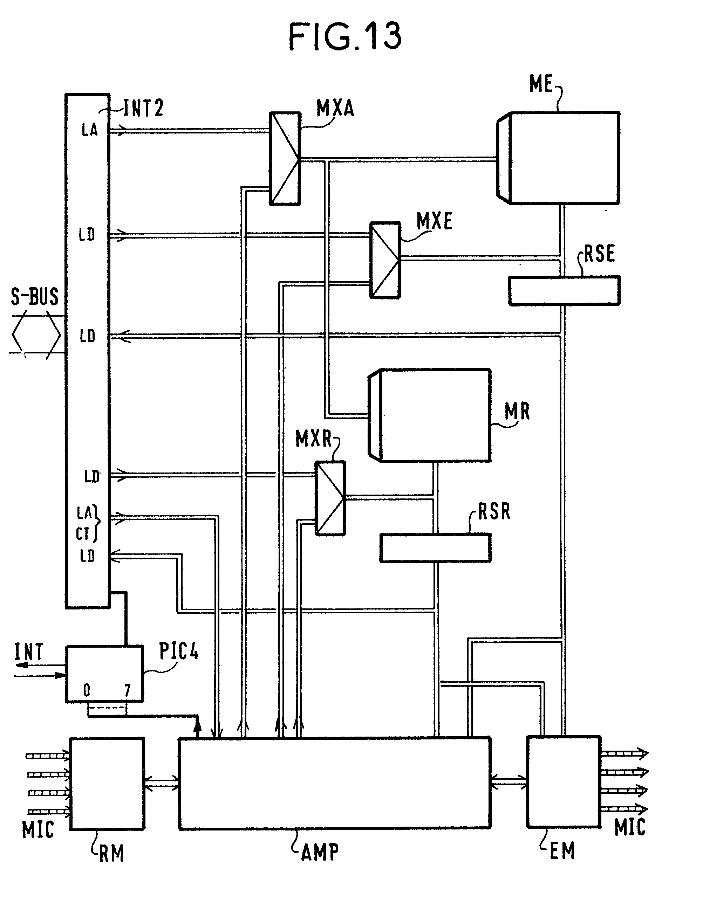

Le circuit d'interface AMIC entre processeur CPU et liaisons MIC commutées par le réseau de connexion est représenté schématiquement sur la figure 13.

Le circuit permet de relier au bus du processeur CPU les quatre liaisons MIC qui desservent un groupe d'unités de terminaux.

Le circuit décrit ici est réalisé pour la desserte de trente deux unités de terminaux au maximum, avec utilisation de deux sortes de procédures:
- Exploration cyclique: le circuit interroge cycliquement toutes les unités UT. Chaque unité répond soit par un simple acquittement si elle n'a rien à signaler, ou par un message d'événement indiquant un changement d'état, une réponse à un ordre du processeur, ou une faute.

En sens inverse le processeur CP peut envoyer un message à une ou plusieurs unités destinatrices.
- Procédure point à point permettant une utilisation indépendante des voies émission et réception. Cette procédure est utilisée soit pour la maintenance par exemple pour une simulation d'un groupe GUT soit pour établir une liaison de commande de type sémaphore, par exemple suivant le système n° 7 défini par le CCITT.

Le circuit réalisé pour cette application comporte les éléments suivants:
- Un automate microprogrammé AMP pilote l'ensemble du circuit et réalise l'exploration cyclique.
- Une mémoire de réception MR et une mémoire d'émission ME dont les compteurs seront détaillés plus loin. Ces mémoires permettent de stocker, pour chaque voie d'émission et de réception, les paramètres et le mode d'exploitation de la voie et une file de messages par voie active. Les mémoires sont accessibles en écriture et en lecture par le processeur CPU et par l'automate AMP.
- Des Circuits associés aux mémoires comprenant un multiplexeur commun d'adressage MXA, un multiplexeur d'accès MXE ou MXR pour chaque mémoire ME et MR et un registre de sortie RSR, RSE pour chaque mémoire.
- Un émetteur EM, et un récepteur RM, reliés aux quatre liaisons MIC et pilotés par l'automate réalisent les échanges de messages en procédure HDLC. Les structures de l'émetteur et du récepteur sont analogues à celles des circuits programmables déjà cités (INTEL 8273 ou MOTOROLA 6854) mais ils sont réalisés ici en circuits discrets pour faciliter l'adaptation aux conditions ú'utilisation spécifiques de l'application.
- Un circuit, d'interface INT2 de liaison au bus S-BUS du processeur CPU analogue à celui qui a été décrit dans le cas du circuit ARIT.
- Un circuit de gestion des interruptions PIC4 par exemple un circuit programmable de type 8259 (INTEL), relié en mode esclave au circuit d'interruption du processeur CPU.

Pour obtenir la rapidité d'échange souhaitée pour le système, l'automate est réalisé en logique câblée (mémoire morte adressée séquentiellement pour l'exploration cyclique et la distribution des signaux de pilotage des différentes parties du circuit AMIC, et additionneurs pour le calcul des adresses mémoire à partir des adresses de base et de pointeurs décrits plus loin), et on a choisi les conditions suivantes d'émission et de réception:
- Le récepteur est affecté à une seule liaison à la fois. Les messages reçus sur les trois autres liaisons MIC sont ignorés.
- L'émission est réalisée sur une ou plusieurs liaisons. Les liaisons actives sont désignées par un masque d'éléments binaires programmé en mémoire. Les liaisons non actives ont une sortie haute impédance, ce qui permet de coupler sur les mêmes liaisons les circuits AMIC des unités de commande UC d'un même groupe GUC.

Le circuit AMIC peut traiter huit canaux d'échange sur des voies temporelles distinctes.

Pour le mode d'exploration cyclique, les conditions supplémentaires suivantes ont été choisies:
- Pas d'émission et de réception simultanées sur un canal.
- Les canaux émission et réception sont affectés à la même voie temporelle.
- La liaison MIC de réception est la même pour toutes les unités de terminaux d'un groupe GUT.
- Le circuit AMIC n'analyse pas les messages d'ordres. Toute séquence d'émission doit se terminer par la réception d'un accusé de réception.

La structure des mémoires d'échange est la suivante.

Le circuit AMIC est commandé comme un espace mémoire du processeur, c'est-à-dire que les seules informations utilisées sont l'adresse, les commandes de lecture et d'écriture, et la réponse »PRT«. Le circuit AMIC utilise un espace mémoire de seize kilo octets. Les premiers octets sont affectés à l'identification du circuit et au traitement des interruptions. Les mémoires ME et MR comportent chacune deux kilo octets.

Le contenu de la mémoire d'émission est présenté tableau 1, elle contient trente deux mots de deux octets MCO à MC31, dont un mot par canal actif ou inactif, ces mots permettent de stocker le numéro de canal, l'état du canal, le masque définissant les liaisons actives en émission. Les cinq états suivants sont utilisés:
- 1- Canal actif
- 2- Repos: à la fin d'un-cycle d'exploration, le circuit AMIC demande un interruption du preces- seur, et place le canal à l'état repos pour l'inhiber jusqu'au cycle suivant.
- 3- Inhibition de l'accès à la file de réception et inhibition d'accusé de réception pour les messages d'événements venant des unités UT. Ceci permet de ne pas perdre de messages d'événements en cas de saturation de la file, et de laisser le passage aux réponses aux ordres prioritaires.
- 4- Arrêt d'exploration en fin de cycle déterminée par la lecture de l'adresse du dernier UT exploré.
- 5- Transmission d'un message de commande. Cet état peut être validé à partir d'un état 2 ou 4.

Pour chacun des N canaux actifs (N =8) la mémoire ME comporte un bloc de contrôle du canal, une table d'adresse des unités de terminaux gérées par le canal, et une file de message à transmettre (au maximum 8).

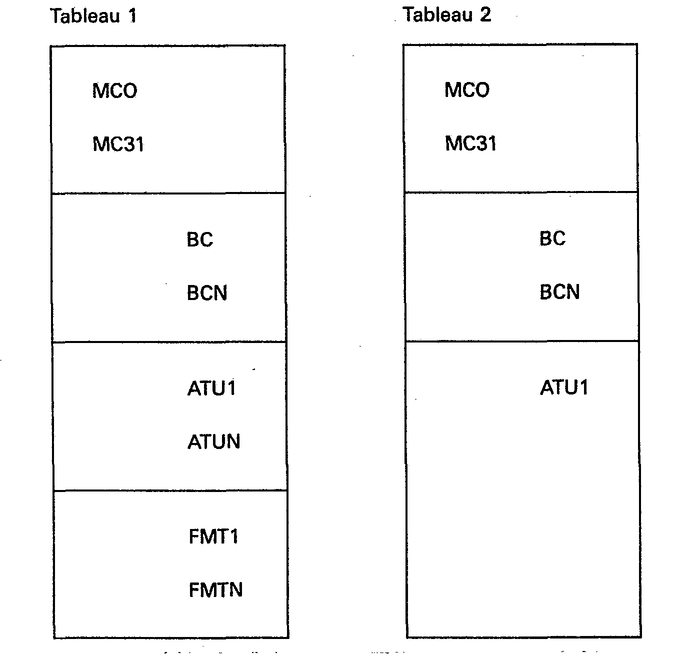

Chaque bloc BC comporte trente deux octets qui ont l'utilisation suivante:
- octet 0: réservé à la communication avec le canal réception correspondant
- octet 1: mode d'utilisation du canal (exploration cyclique ou point à point).
- octets 2 et 3: pointeurs de début et de fin de la fils de messages. Ces pointeurs sont égaux lorsque la file est vide.
- octets 6 et 7: comptage du nombre de fois qu'un message doit être émis avant abandon (nombre total et compteur courant incrémenté à chaque émission du message en cours de traitement).
- octets 8 et 9: adresse de début et pointeur de la table d'adresse des unités de terminaux UT.
- octets 10 et 11: définissent les caractères de contrôle des messages d'exploration et de demande d'accusé de réception.
- octets 12 à 31: pointeurs associés à chaque message (8 au maximum) plus 2 pointeurs utilisés en interne par l'automate pour la transmission d'ordres aux unités UT gérées pour le canal.

La structure de la mémoire de réception présentée tableau 2 est voisine de celle de la mémoire d'émission. Les différences résident dans l'absence de table d'adresse des unités UT et dans l'utilisation des octets 6 à 11 des blocs BC définis ci-dessous:
- octets 6-7: durée limite et compteur de mesure de l'attente de la réponse à un message vers une unité UT
- octet 8: inutilisé
- octet 9: caractère de contrôle de l'accusé de réception mettant fin à une séquence d'émission
- octets 10-11: indication du niveau d'interruption.

Les files de réception contiennent uniquement les messages d'événements en réponse à l'exploration cyclique, les réponses aux ordres du processeur et les messages d'erreur. D'une manière générale les données d'exploitation sont écrites par le processeur uniquement à chaque initialisation du circuit AMIC. Les compteurs et pointeurs sont incrémentés ou calculés par l'automate AMP.

Les principales actions du processeur CPU relatives au circuit AMIC sont les suivantes:
- Initialisation
   - Modification des tables d'exploration (addition ou suppression d'unités de terminaux)
   - modification des canaux actifs et des paramètres d'exploitation
- Exploration des pointeurs de files de messages de réception
- Lecture des messages correspondants
- Ecriture de messages en files d'émission
- Interruptions
   - initialisation du circuit PIC4
   - traitement des interruptions et lecture des messages de fautes
- Procédure point à point

### Lecture et écriture des paramètres d'exploitation

### Lecture et écriture des files de messages.

Le fonctionnement général de l'autocommutateur décrit ci-après est basé d'une part sur la structure exposée plus haut en détail, et d'autre part sur la nombreuse littérature dont dispose l'homme de l'art dans les domaines suivants:
- Equipements téléphoniques et leur exploitation
- Centraux téléphoniques à réseau de connexion temporel
- Commande par calculateur:
   - Etablissement des communications: logiciels de traitement des appels
   - Gestion: logiciels d'exploitation et de maintenance.

A partir de ces éléments la description qui suit portera sur l'organisation du logiciel basée sur l'architecture matérielle, sur le déroulement d'une communication téléphonique depuis le décrochage jusqu'à la phase de libération, et enfin sur l'utilisation des moyens redondants.

Le logiciel est réparti de par la nature du système. Il est organisé en machines logiques, qui sont des sous-ensembles du logiciel vus comme des unités de commande indépendantes, ne communiquant avec l'environnement que par échanges de messages. Les machines logiques correspondent à des fonctions logiquement indépendantes: traitement d'appels téléphoniques, gestion de fichiers, interprétation de commandes opérateur, gestion de l'heure, ...

Le réseau des unités de commande est de ce fait remplacé - du point de vue de l'utilisateur - par un réseau de machines logiques. Cette généralisation de l'architecture du matériel est motivée par deux considérations:
- la communication par messages existe nécessairement entre unités de commande puisque ceux-ci ne disposent pas de mémoire commune,
- on a distingué machine logique et machine physique, car pour des raisons économiques, on est amené à regrouper sur une unité de commande plusieurs fonctions indépendantes pour utiliser au maximum le volume mémoire et la puissance de calcul. Les fonctions sont regroupées à la génération du système.

Certaines machines logiques peuvent être répétées dans plusieurs processeurs. Par exemple, il existe une à trente deux machines logiques de traitement d'appels téléphoniques gérant chacune un certain nombre d'abonnés et de circuits vers d'autres centraux. On peut ainsi accroître la capacité de l'autocommutateur par adjonction d'unités de commande supplémentaires.

L'adressage des machines logiques est fait par nom plutôt que par adresse physique. L'envoi d'un message à une machine logique s'effectue de la même manière, que le destinataire soit dans la même unité de commande ou dans une autre. De cette manière, les reconfigurations sont transparentes à la plupart des programmes.

Les machines logiques ont les caractéristiques suivantes:
- ce sont des unités d'édition de lien et de chargement;
- ce sont des ensembles de tâches (processus asynchrones),
- les messages sont adressés à des tâches dans des machines logiques,
- à chaque tâche sont associées deux files d'attente de messages: une file de requête et une file de réponses aux requêtes,
- les tâches d'une même machine logique peuvent, elles aussi, communiquer entre elles par échange de messages.

Le système d'exploitation est réalisé par un noyau résident qui est répété sur chaque unité de commande. On y trouve une séquence d'initialisation en mémoire morte (MLI, figure 10), capable de charger le reste du noyau résident, à l'initialisation et le système de gestion des tâches et des échanges SGTE non représenté qui constitue le coeur du système d'exploitation. Ce système est constitué de deux sous-ensembles:
- un ensemble de services assurant la gestion des échanges, la gestion de la mémoire, la gestion des tâches. Cet ensemble comprend des primitives appelées par les machines logiques:
   - envoi de messages,
   - attente de requêtes, de réponses,
   - connexion d'une procédure à une interruption (une telle procédure communique par messages avec les autres tâches de la machine logique à laquelle elle appartient),
- lecture d'informations diverses: n° de tâche courante, heure, ...
- une machine logique dite de supervision MLS (non représentée) incluse systématiquement dans chaque processeur au démarrage. C'est elle qui rend les services liés à la gestion du processeur, en particulier:
   - charger une machine logique dans l'unité de commande et l'activer,
   - indiquer où se trouvent les machines logiques implantées dans les autres processeurs,
   - supprimer une machine logique,
   - redémarrer l'unité de commande,
   - mettre à jour son horloge.

Par ailleurs, la machine MLS assure des fonctions de test et de défense de l'unité de commande, de gestion de données et d'aide à la mise au point.

L'exemple choisi de déroulement d'une communication concerne une communication locale dans les conditions particulières suivantes:
- L'abonné demandé est libre
- le demandeur raccroche le premier
- les terminaux du demandeur et du demandé sont gérés par des unités de commandes distinctes (UC1, UC2).

Des tableaux 3 à 8 précisés ci-dessous décrivent les phases de la communication c'est-à-dire les messages échangés:
Tableau 3: Présélection, numérotation, traduction dans le cas d'un abonné à cadran,
Tableau 4: Présélection, numérotation, traduction dans le cas d'un abonné à clavier multifré- quences.
Tableau 5: Sélection locale,
Tableau 6: Fin de sélection,
Tableau 7: Connexion avec contrôle du chemin établi.
Tableau 8: Libération.

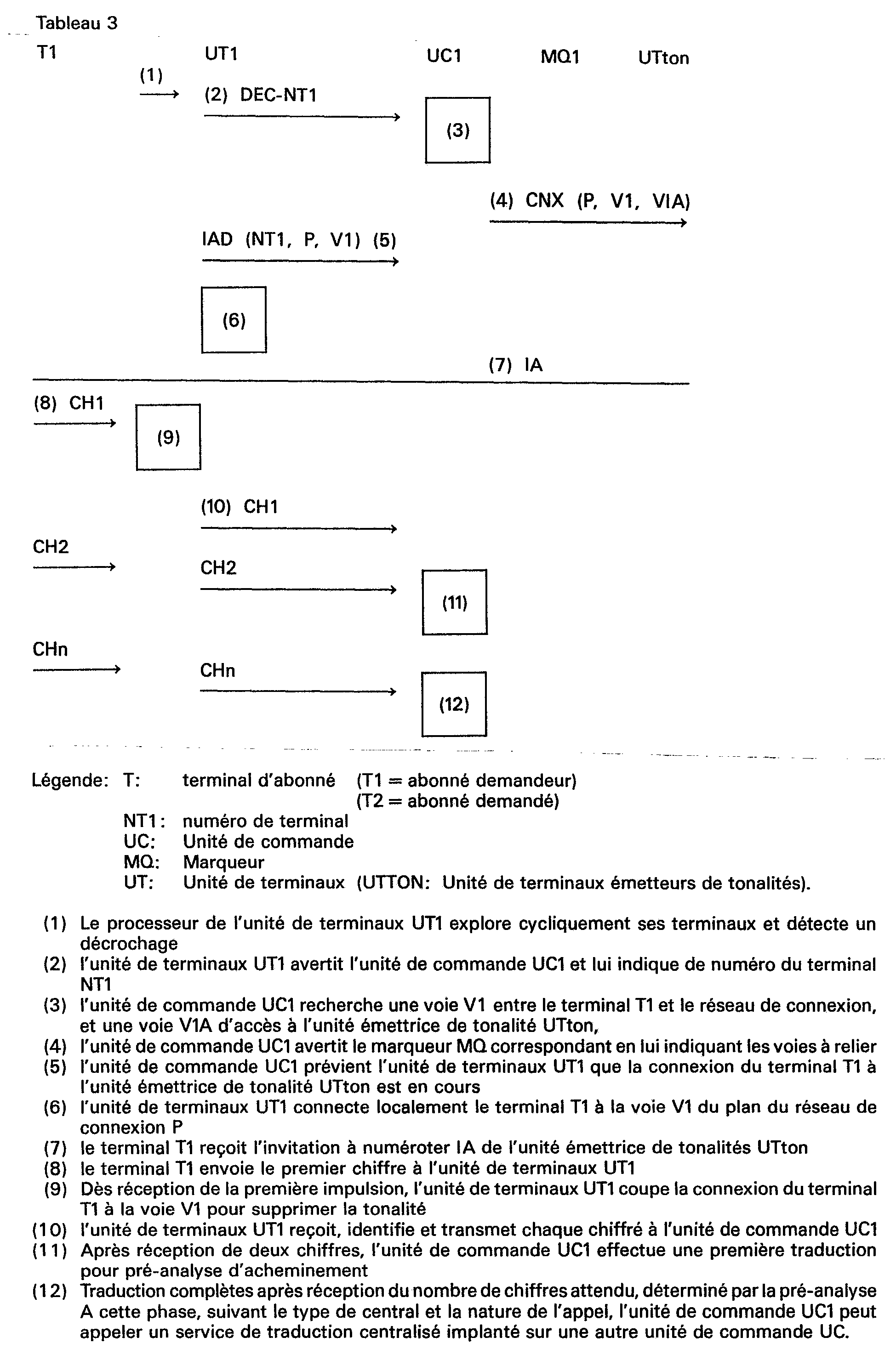

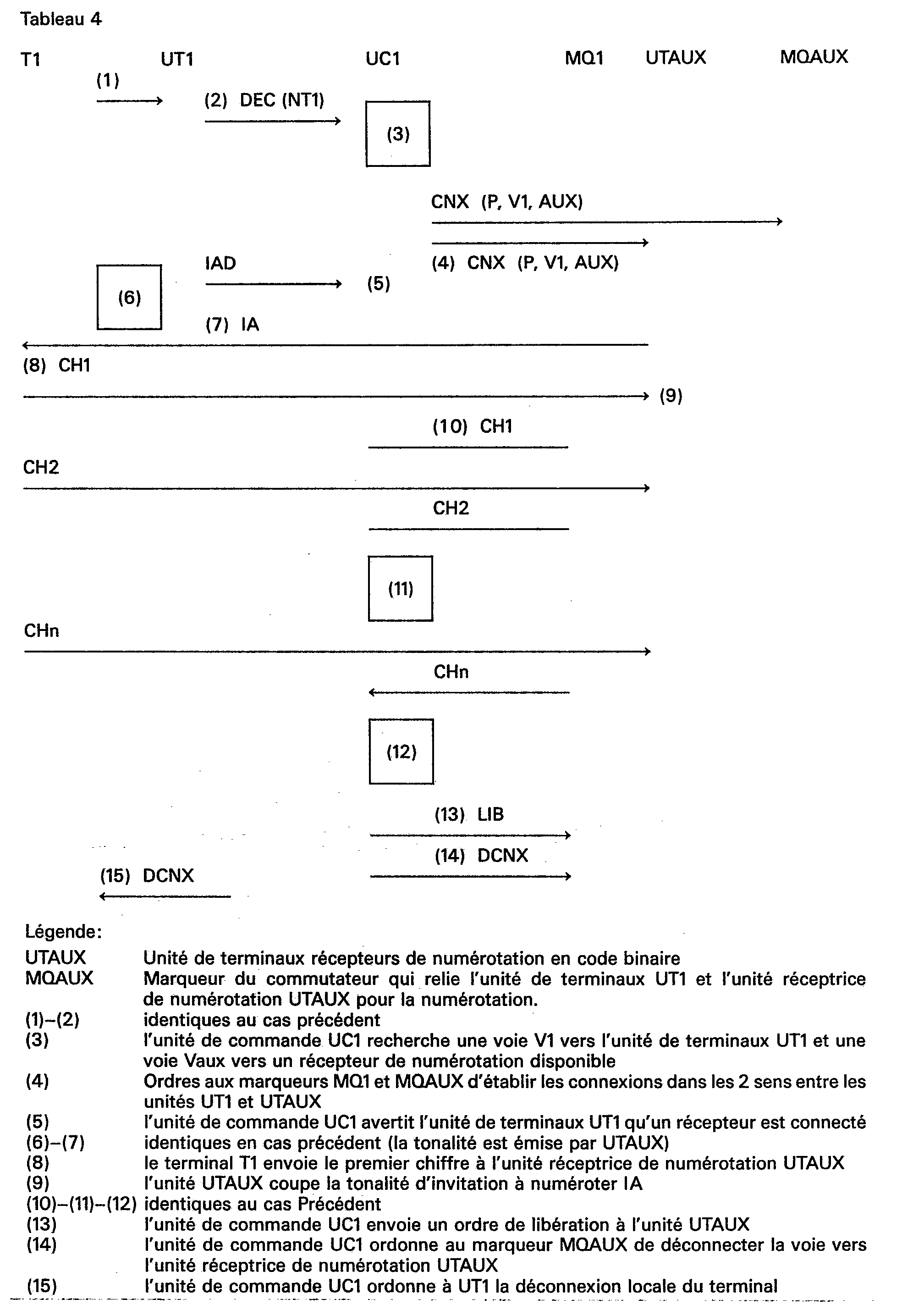

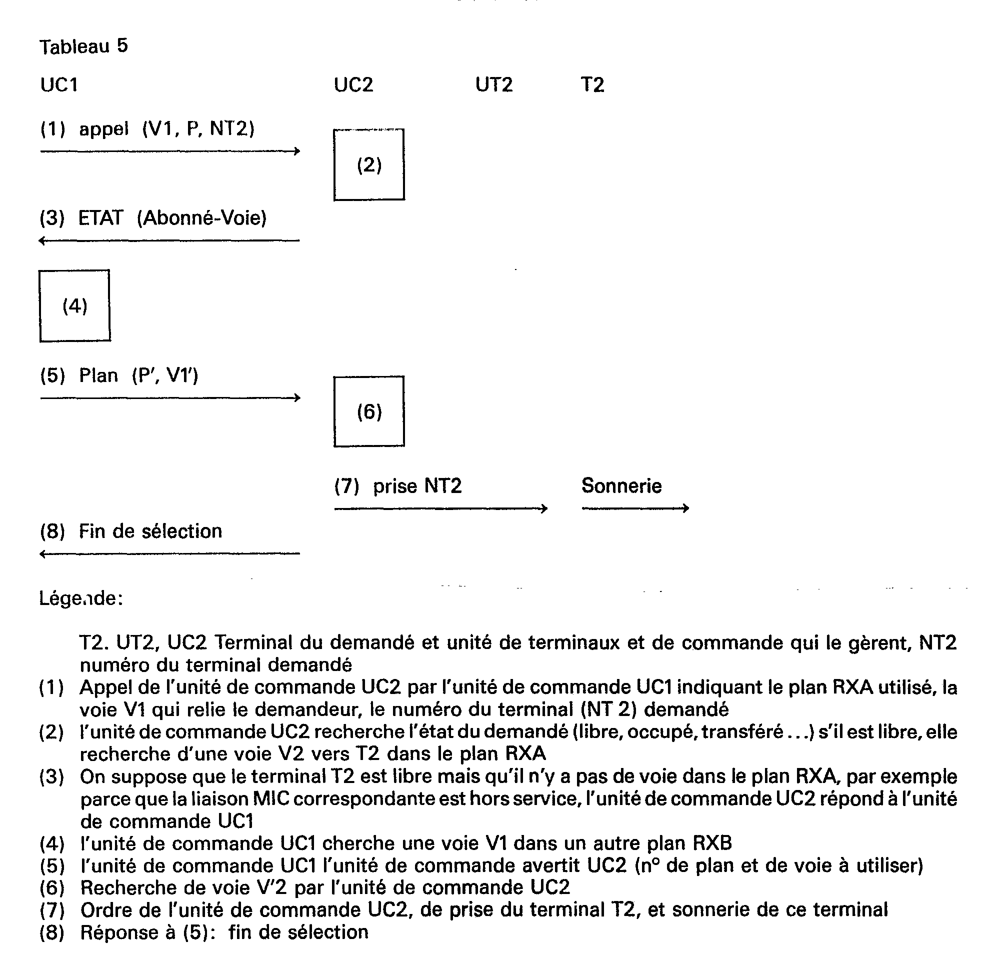

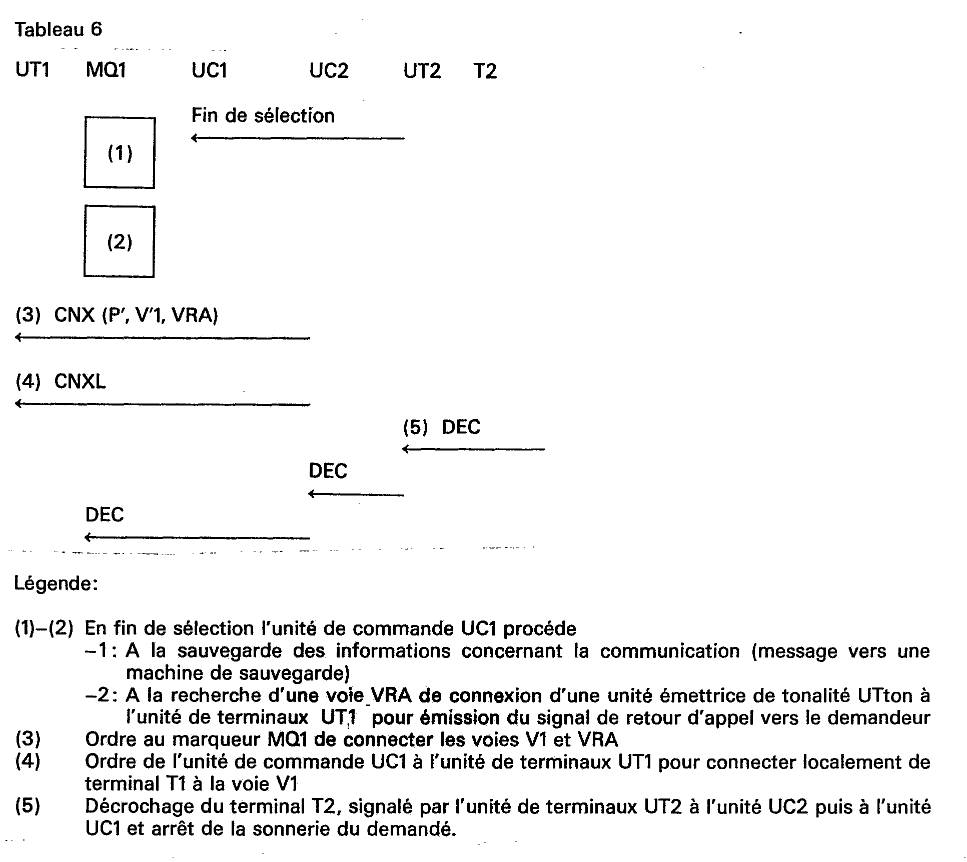

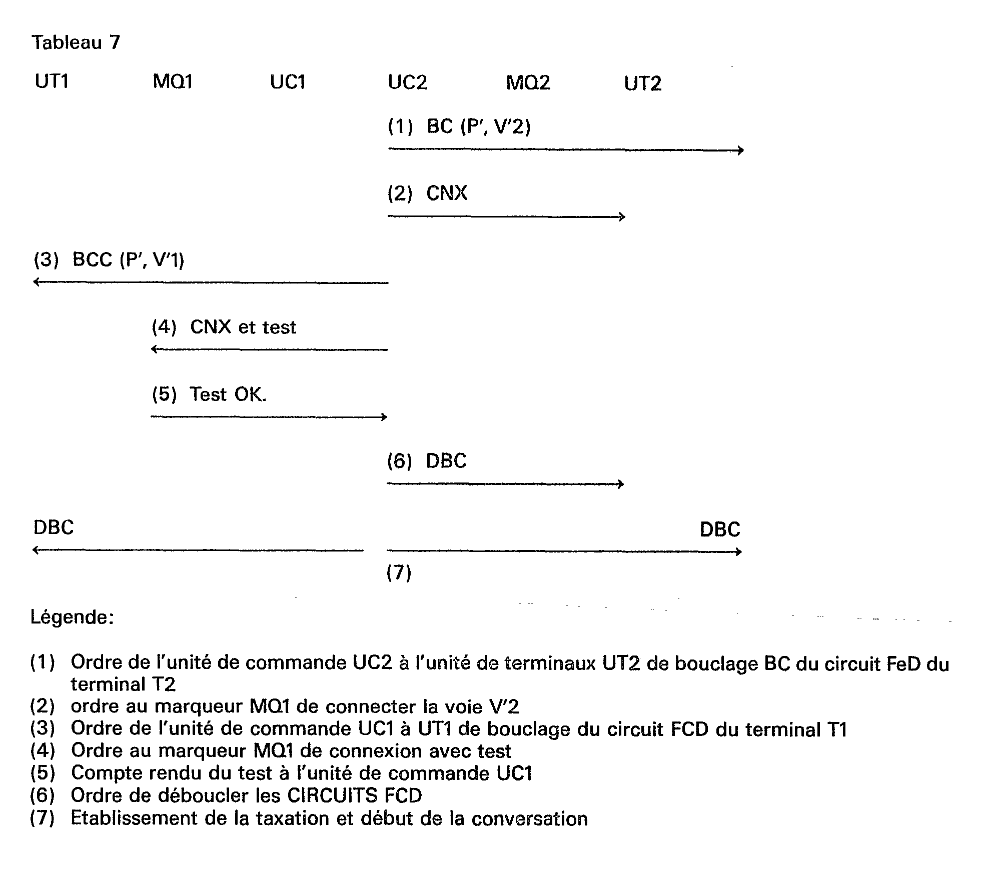

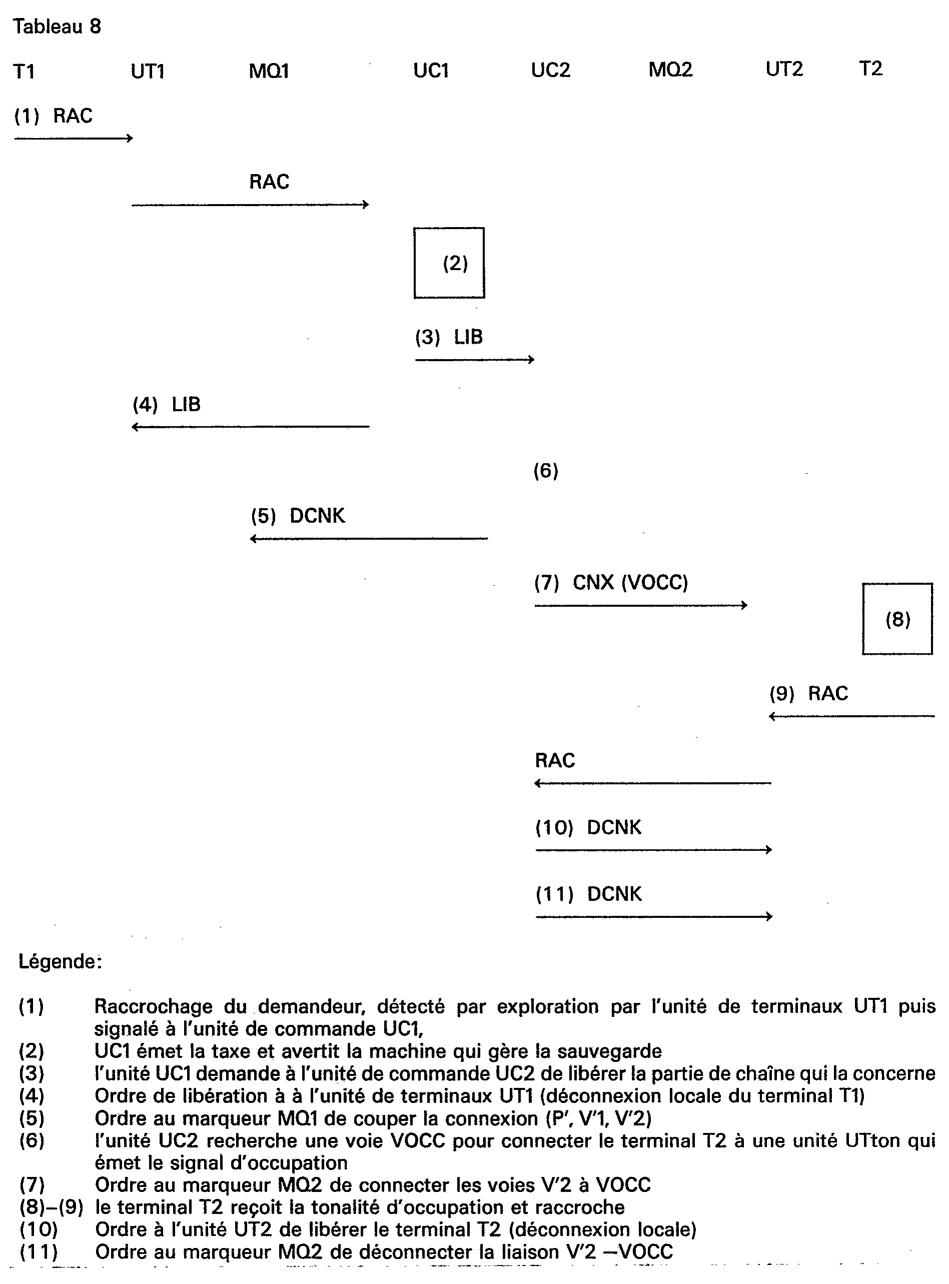

La répartition du logiciel en machines logiques et en tâches qui peuvent communiquer entre elles par messages, le destinataire étant reconnu par un code d'identification (numéro de machine logique, numéro de tâche) indépendant de l'implantation physique, permet de configurer le système au départ, et de le reconfigurer après une modification ou en cas de panne d'une unité de commande.

Pour cela l'implantation des machines logiques est pilotée par une machine logique de supervision MLR. Pour connaitre l'état du système et commander les reconfigurations, la machine MLR interroge périodiquement tous les processeurs. Dans chaque processeur est implantée une tâche de maintenance qui effectue des tests internes et indique à la machine MLR l'état du processeur.

Les moyens et les opérations mis en action lors d'une reconfiguration et à l'initialisation du système sont conditionnés par les choix suivants:
- Tous les processeurs disposent d'un logiciel d'initialisation en mémoire morte qui a été évoqué en liaison avec la description des circuits CPU.
- Les machines logiques et tâches d'un processeur, ainsi que la gestion des échanges de messages sont supervisés par un logiciel moniteur appelé système de gestion des tâches et des échanges SGTE.
- l'ensemble du logiciel est dupliqué et stocké sur deux disques qui sont gérés par des processeurs distincts pour des raisons de sécurité.

Les séquences d'initialisation de deux processeurs avec disque décident, par échange de message temporisé, qui doit démarrer en devenant le processeur maître, la séquence d'initialisation de ce dernier charge le système de gestion des tâches et des échanges SGTE, une machine logique assurant la gestion des fichiers, et la machine logique de gestion du réseau de commande.

La machine MLR interroge les séquences d'initialisation des autres processeurs pour déterminer ceux qui sont présents; elle constitue une carte du réseau et alloue les machines logiques aux processeurs.

Pour des conditions données (cahier des charges précisant la fiabilité, la disponibilité, la fréquence des interventions ...), la structure décrite permet d'optimiser de deux façons le nombre de processeurs utilisés:
- La banalisation des processeurs permet une redondance réduite par exemple pour n processeurs UC de traitement d'appel, le nombre total de processeurs sera de p +q, avec p < q.
- Les tâches sont classées par ordre de priorité: une reconfiguration en cas de panne permet de supprimer momentanément des tâches non urgentes. Les tâches peuvent être implantées de préférence dans les processeurs redondants, ce qui réduit encore le matériel nécessaire.

Les caractéristiques de la structure selon l'invention qui permettent d'obtenir une grande sécurité de fonctionnement sont donc les suivantes:
- un réseau de connexion à quatre plans indépendants, avec une liaison MIC de chaque plan à chaque groupe (GUT, GUC); on peut considérer que les moyens nécessaires à l'écoulement du trafic avec un blocage réduit ou négligeable correspondent à l'équipement de deux plans. L'équipement de quatre plans est donc une duplication des moyens, mais la sécurité obtenue est beaucoup plus grande du fait de l'indépendance des plans, et elle permet de supporter des pannes multiples sans nécessité d'intervention.
- Le réseau d'échanges de messages est doublé, les deux distributeurs opérant en partage de charge, et chacun étant capable d'écouler la totalité du trafic en cas de panne.

Les liaisons du type point à point évitent qu'une unité de commande en panne perturbe le réseau. D'autre part en cas de panne d'un module, seules les unités raccordées à ce module n'ont plus accès qu'à une liaison RIT. Les autres disposent encore des deux liaisons.

## Revendications

1. Autocommutateur temporel comportant un réseau de connexion (RX), des unités de terminaux (UT) reliées au réseau de connexion par des liaisons multiplexes (LX) et pilotées par des microprocesseurs (mP), un ensemble d'unités de commande constitué de microprocesseurs reliés entre eux par un réseau d'échange d'informations, du type liaison série, et répartis en microprocesseurs banalisés de commande (UC) et microprocesseurs de gestion (UCP) équipés de périphériques, ainsi qu'un logiciel réparti entre les microprocesseurs des différentes unités, caractérisé en ce que les microprocesseurs de commande (UC), reliés aux microprocesseurs de gestion (UCP) et à des marqueurs (MQ) de pilotage du réseau de connexion par un réseau d'échange d'informations (RIT), du type liaison série point à point, à procédure sémaphore, géré en accès par un distributeur (DR), sont aussi reliés au réseau de connexion par des liaisons multiplexes, exploitées en procédure sémaphore, pour les échanges avec les microprocesseurs des unités de terminaux et en ce que le logiciel de commande est constitué de machines logiques, individuellement adressables indépendamment des microprocesseurs où elles sont réparties et fonctionnnellement indépendantes les unes des autres dans l'accomplissement des tâches spécifiques qui leur sont individuellement affectées et pour lesquelles elles communiquent entre elles par échange de message en procédure sémaphore via les différentes liaisons (LX, RIT).

2. Autocommutateur suivant la revendication 1, caractérisé par le fait que dans le réseau de connexion (RX), composé de plans indépendants (RXA,RXD) pilotés par les marqueurs (MQ), chaque plan comporte un seul étage formé d'une matrice temporelle carrée composée de commutateurs (CX), reliés aux unités de terminaux (UT), organisées en groupes d'unités de terminaux (GUT), et aux unités de commande (UC), organisées en groupe d'unité de commande (GUC), par des liaisons multiplex (LX) qui sont les mêmes pour les unités de terminaux ou de commande d'un même groupe.

3. Autocommutateur suivant la revendication 1, dans lequel les unités de commande (UC) comportent un bus système (S-BUS) reliant une carte processeur (CPU) à des coupleurs (ARIC, AMIC) et à des cartes mémoires (CM1 à CM4), et dans lequel la carte processeur (CPU) comporte un microprocesseur (mPU) dont le bus processeur (BP) donne accès aux bus système (S-BUS) et à un bus résident (BRES) desservant les ressources internes à la carte (CPU), caractérisé par le fait que le bus processeur (BP) est relié à un registre (RBP) dont la sortie fournit le bus d'adresses internes (BADR) et les lignes d'adresses (LA) du bus système (S-BUS), et en ce que les commandes de sélection et de synchronisation des circuits de la carte sont fournies par des décodeurs (DEC8, DEC9) dont les entrées sont reliées d'une part au bus d'adresse et d'autre part à des circuits de contrôle (PB1, PB2) pilotés par les sorties de commande (SO-S2) du processeur.

4. Autocommutateur suivant la revendication 3, dans lequel les unités de commande sont banalisées (UC) et comportent un coupleur (ARIT) de liaison au réseau d'échanges (RIT) et un deuxième coupleur (AMIC) de liaison aux voies MIC (LXnA à LXnD) reliés au réseau de connexion, caractérisé par le fait que:
- les coupleurs sont pilotés par le processeur en mode »espace mémoire«,
- le premier coupleur (ARIT) peut prendre le contrôle du bus système (S-BUS).
- la gestion de la prise du bus système (S-BUS) est effectuée par ces codeurs à priorité (CPD) et par des liaisons point à point (AUB, DUB) vers les coupleurs.

5. Autocommutateur suivant la revendication 4, caractérisé par le fait que ledit deuxième coupleur (AMIC) comporte:
- une interface de liaison au bus système (S-BUS)
- des mémoires (ME, MR) dans lesquelles sont enregistrées les données concernant la gestion des voies MIC, et des files de message en émission et en réception
- des circuits d'émission et de réception (EM, RM) reliés aux voies MIC pour les échanges de message en procédure par canal sémaphore
- un automate (AMP) de pilotage du coupleur
- des multiplexeurs (MXA, MXE, MXR) permettent l'accès aux mémoires par l'automate et par le processeur.

6. Autocommutateur suivant la revendication 5 dans lequel le choix des voies MIC actives en réception et en émission et les conditions d'exploitation sont chargées dans les mémoires en phase d'initialisation par le processeur,
caractérisé par le fait que l'automate (AMP) comporte une mémoire morte adressée par un compteur pilotant en temps partagé les transferts d'informations entre les voies MIC actives, les mémoires et l'automate.

7. Autocommutateur suivant la revendication 2 dans lequel les commutateurs temporels (CX1 ) sont pilotés par des mémoires de commande (MC) et dans lequel chaque marqueur (MQ) est commandé par un processeur (mpC) caractérisé en ce que le marqueur est muni d'un coupleur de liaison au réseau d'échange d'informations commun (RIT1) comportant:
- un automate de commande du coupleur (AU)
- un circuit d'émission/réception (HDLC1) sur le réseau d'échange d'informations commun (RIT), pouvant être piloté par le processeur (mPC) et par l'automate (AU)
- une interface de liaison avec le bus du processeur composée essentiellement des éléments (IN, RA1, RC, CB4, CBS, RDE, RDS),
- des mémoires d'émission et de réception (MEM, MRE) adressables par les compteurs (CB4, CB5) et par le processeur (mPC)
- une interface de commande composée des éléments (BD, DEC4, DEC5) pour les mémoires (MC) des commutateurs (CX).

8. Autocommutateur suivant la revendication 1, caractérisé par le fait que ledit réseau d'échange d'informations (RIT) est dupliqué (RIT1, RIT2), et est piloté par un distributeur dupliqué (DR1, DR2) à priorité tournante afin d'être utilisé en partage de charge.

9. Autocommutateur suivant la revendication 1 dans lequel le logiciel de commande est réparti en machines logiques indépendantes auxquelles sont attribuées des priorités différentes, caractérisé par le fait que le nombre total (p + q) d'unités de commande banalisées n'est que très peu supérieur au nombre p d'unités de commande (UC1) strictement nécessaire pour recevoir l'ensemble du logiciel, l'ensemble des machines logiques étant géré par un microprocesseur d'unité de commande (UCP1) comportant un programme de supervision et une table d'implantation des machines logiques dans les unités analisées, permettant en cas de panne d'unités banalisées de reconfigurer les machines logiques, ete dans le cas ou l'ensemble des machines encore en fonctionnement est saturé, de reconfigurer en supprimant les machines logiques non prioritaires, le chargement et les reconfigurations de machines logiques étant réalisé par ce microprocesseur via le réseau d'échange (RIT).

10. Autocommutateur suivant la revendication 2, caractérisé par le fait que les liaisons de commande entre unités de commande (UC) et unités de terminaux (UT) sont maintenues en cas de panne:
- par changement de liaison MIC
- par modification en cas de panne d'un commutateur des liaisons (LX) semi-permanentes entre unités de commande [UC, UCP) et unités de terminaux (UT).

## Patentansprüche

1. Zeitmultiplex-Selbstwählvermittlungsanlage, mit einem Koppelnetz (RX), mit Endschaltungseinheitdn (UT), die über Multiplexverbindungen (LX) an das Koppelnetz angeschlossen sind und von Mikroprozessoren (mP) gesteuert werden, mit einer Gruppe von Steuereinheiten, die aus miteinander über ein Informationsaustauschnetz vom Reihenverbindungstyp verbundenen Mikroprozessoren besteht, wobei die Mikroprozessoren in allgemein verwendbare Steuer-Mikroprozessoren (UC) und in mit Peripher-Geräten ausgerüstete Betriebs-Mikroprozessoren (UCP) eingeteilt sind, und mit einer auf die Mikroprozessoren der verschiedenen Einheiten aufgeteilten Software, dadurch gekennzeichnet, daß die Steuer-Mikroprozessoren (UC), die mit den Betriebs-Mikroprozessoren (UCP) und mit Markierern (MQ) zur Steuerung des Koppelnetzes über ein Informationsaustauschnetz (RIT) verbunden sind, das vom Typ einer Punkt-zu-Punkt-Serienverbindung ist, ein Semaphorverfahren verwendet und zugriffsmäßig von einem Verteiler (DR) betrieben wird, außerdem an das Koppelnetz über Multiplexverbindungen angeschlossen sind, die im Semaphor-Verfahren für den Datenaustausch mit den Mikroprozessoren der Endschaltungseinheiten betrieben werden, und daß die Steuer-Software aus logischen Maschinen besteht, die individuell und unabhängig von den Mikroprozessoren, auf die sie verteilt sind, adressiert werden können und die funktionsmäßig voneinander unabhängig in der Ausführung der spezifischen ihnen individuell zugeteilten Aufgaben sind, für die sie miteinander durch Nachrichtenaustausch im Semaphorverfahren über die verschiedenen Verbindungen (LX, RIT) verkehren.

2. Selbstwählvermittlungsanlage nach Anspruch 1, dadurch gekennzeichnet, daß im Koppelnetz (RX), das aus unabhängigen von den Markierern (MQ) gesteuerten Ebenen (RXA, RXD) zusammengesetzt ist, jede Ebene eine einzige Stufe aufweist, die von einer quadratischen und aus Schaltern (CX) zusammengesetzten Zeitmultiplexmatrix besteht, wobei die Schalter an die Endschaltungseinheiten (UC) angeschlossen sind, die in Gruppen von Endschaltungseinheiten (GUT) gegliedert sind, und an die Steuereinheiten (UC) angeschlossen sind, die in Gruppen von Steuereinheiten (GUC) gegliedert sind, und zwar über Multiplexverbindungen (LX), die die gleichen sind für die Endschaltungseinheiten oder die Steuereinheiten ein und derselben Gruppe.

3. Selbstwählvermittlungsanlage nach Anspruch 1, in der die Steuereinheiten eine Systemschiene (S-BUS) aufweisen, die eine Prozessorkarte (CPU) an Koppler (ARIC, AMIC) und an Speicherkarten (CM1 bis CM4) anschließt, während die Prozessorkarte (CPU) einen Mikroprozessor enthält (mPU), dessen Prozessorschiene (BP) Zugriff zur Systemschiene (S-BUS) und zu einer Residenzschiene (BRES) bietet, die die internen Hilfsorgane der Karte (CPU) bedient, dadurch gekennzeichnet, daß die Prozessorschiene (BP) an ein Register (RBP) angeschlossen ist, dessen Ausgang die Internadressenschiene (BADR) und die Adressenzeilen (LA) der Systemschiene (S-BUS) liefert, und daß die Steuerungen für die Auswahl und die Synchronisation der Schaltkreise der Karte von Dekodern (DEC8, DEC9) geliefert werden, deren Eingänge einerseits an die Adressenschiene und andererseits an Steuerschaltkreise (PB1, PB2) angeschlossen sind, die von den Steuerausgängen (SO-S2) des Prozessors gesteuert werden.

4. Selbstwählvermittlungsanlage nach Anspruch 3, in der die Steuereinheiten (UC) allgemein verwendbar sind und die einen Koppler (ARIT) für die Verbindung zum Austauschnetz (RIT) sowie einen zweiten Koppler (AMIC) zur Verbindung zu den PCM-Kanälen (LXnA bis LXnD) aufweisen, wobei die beiden Koppler an das Koppelnetz angeschlossen sind, dadurch gekennzeichnet, daß:
- die Koppler vom Prozessor im Speicherplatzmodus gesteuert werden,
- der erste Koppler (ARIT) die Kontrolle der Systemschiene (S-BUS) übernehmen kann,
- die Verwaltung der Übernahme der Systemschiene (S-BUS) durch diese Prioritätskodierer (CPD) und durch Punkt-zu-Punkt-Verbindungen (AUB, DUB) zu den Kopplern erfolgt.

5. Selbstwählvermittlungsanlage nach Anspruch 4, dadurch gekennzeichnet, daß der zweite Koppler (AMIC) aufweist:
- eine Verbindungsschnittstelle zur Systemschiene (S-BUS),
- Speicher (ME, MR), in denen die den Betrieb der PCM-Kanäle und der Nachrichtenfiles beim Senden und beim Empfang betreffenden Daten gespeichert sind,
- Sende- und Empfangskreise (EM, RM), die an die PCM-Kanäle für den Nachrichtenaustausch gemäß dem Verfahren über Semaphor-Kanal angeschlossen sind,
- einen Steuerautomaten (AMP) für den Koppler,
- Multiplexer (MXA, MXE, MXR), die den Zugriff zu den Speichern durch den Automaten und den Prozessor zulassen.

6. Selbstwählvermittlungsanlage nach Anspruch 5, in der die Wahl der im Empfang und im Senden aktiven PCM-Kanäle sowie die Betriebsbedingungen in die Speicher während der Startphase des Prozessors eingeschrieben werden, dadurch gekennzeichnet, daß der Automat (AM P) einen Festwertspeicher enthält, der von einem die Informationsübergänge zwischen den aktiven PCM-Kanälen, den Speichern und dem Automaten im Zeitmultiplex steuernden Zähler adressiert wird.

7. Selbstwählvermittlungsanlage nach Anspruch 2, in der die Zeitmultiplexschalter (CX1) von Steuerspeichern (MC) gesteuert werden und in der jeder Markierer (MQ) von einem Prozessor (mPC) gesteuert wird, dadurch gekennzeichnet, daß der Markierer mit einem Koppler zur Verbindung mit dem gemeinsamen Informationsaustauschnetz (RIT1 ) versehen ist, wobei der Koppler aufweist:
- einen Koppler-Steuerautomat (AU),
- einen Sende/Empfangskreis (HDLC1) auf dem gemeinsamen Informationsaustauschnetz (RIT), der vom Prozessor (mPC) und vom Automaten (AU) gesteuert werden kann,
- eine im wesentlichen die Elemente (IN, RA1, RC, CB4, CBS, RDE, RDS) enthaltende Verbindungsschnittstelle mit der Schiene des Prozessors,
- Sende- und Empfangsspeicher (MEM, MRE), die von den Zählern (CB4, CB5) und vom Prozessor (mPC) adressiert werden können,
- eine Steuerschnittstelle, die aus Elementen (BD, DEC4, DEC5) für die Speicher (MC) der Schalter (CX) zusammengesetzt ist.

8. Selbstwählvermittlungsanlage nach Anspruch 1, dadurch gekennzeichnet, daß das Informationsaustauschnetz (RIT) doppelt (RIT1, R1T2) vorhanden ist und von einem doppelt vorhandenen Verteiler (DR1, DR2) mit rotierender Priorität gesteuert wird, so daß eine Lastaufteilung erfolgt.

9. Selbstwählvermittlungsanlage nach Anspruch 1, in der die Steuersoftware auf unabhängige logische Maschinen aufgeteilt ist, denen verschiedene Prioritäten zugeordnet sind, dadurch gekennzeichnet, daß die Gesamtzahl (p + q) von allgemein verwendbaren Steuereinheiten nur wenig größer als die Zahl p von Steuereinheiten (UC1) gewählt ist, die unbedingt notwendig für die Aufnahme der Gesamtheit der Software ist, wobei die Gesamtheit der logischen Maschinen von einem Mikroprozessor (UCP1) für die Steuereinheiten verwaltet wird, der ein Überwachungsprogramm und eine Einsatztabelle für die logischen Maschinen in den allgemein verwendbaren Einheiten enthält, so daß es möglich ist, im Fall einer Störung von allgemein zugänglichen Einheiten, die logischen Maschinen neu zu verteilen und, falls die Gesamtheit der noch betriebsfähigen Maschinen gesättigt ist, eine Neuverteilung vorzunehmen, indem die nicht prioritären logischen Maschinen unterdrückt werden, wobei das Laden und die Neuverteilungen der logischen Maschinen von diesem Mikroprozessor über das Austauschnetz (RIT) durchgeführt werden.

10. Selbstwählvermittlungsanlage nach Anspruch 2, dadurch gekennzeichnet, daß die Steuerverbindungen zwischen Steuereinheiten (UC) und Endschaltungseinheiten (UT) im Falle einer Störung
- durch Austausch der PCM-Verbindungen,
- durch Veränderung der halbpermanenten Verbindungen (LX) zwischen Steuereinheiten und Endschaltungseinheiten (UT) bei Störung eines Schalters erhalten bleiben.

## Claims

1. A time division automatic exchange comprising a switching network (RX), terminal units (UT) which are connected to the switching network via multiplex links (LX) and which are controlled by microprocessors (mP), further comprising an assembly of control units composed of microprocessors which are interconnected by an information exchange network of the series link type and which are divided into interchangeable control microprocessors (UC) and in management microprocessors (UCP) equipped with input/output means, and finally comprising a software which is distributed to the microprocessors of the different units, characterized in that the control microprocessors (UC), which are connected to the management microprocessors (UCP) and to the markers (MQ) for controlling the switching network via an information exchange network (RIT) of the point-to-point series link type using a semaphore procedure and access-controlled by a distributor (DR), are further connected to the switching network via multiplex links which are treated according to the semaphore procedure, in view of the exchanges between the microprocessors of the terminal units, and characterized in that the control software is constituted of logical machines which can be individually addressed independently of the microprocessors to which they appertain, and which are independent in function from each other for performing the specific tasks which are individually attributed thereto and for which they communicate with each other by exchanging messages via the different links (LX, RIT) according to the semaphore procedure.

2. An automatic exchange according to claim 1, characterized in that, the switching network (RX) being composed of independent planes (RXA, RXD) controlled by the markers (MQ), each plane comprises a single stage constituted by a square time division matrix having switches (CX) which are connected to the terminal units (UT), these units being organized in groups of terminal units (GUT), and connected to the control units (UC), these units being organized in groups of control units (GUC), via multiplex links (LX) which are the same for the terminal units or for the control units of the same group.

3. An automatic exchange according to claim 1, in which the control units (UC) comprise a system bus (S-BUS) connecting a processor card (CPU) to couplers (ARIC, AMIC) and to memory cards (CM1 to CM4), and in which the processor card (CPU) comprises a microprocessors (mPU), the processor bus (BP) of which gives acces both to the system bus (S-BUS) and to a resident bus (BRES) serving the internal resources of the card (CPU), characterized in that the processor bus (BP) is connected to a regis er (RBP), the output of which supplies the bus of internal addresses (BADR) and the adress lines (LA) of the system bus (S-BUS), and characterized in that the instructions for selecting and synchronizing the circuits of the card are supplied by decoders (DEC8, DEC9), the inputs of which are connected firstly to an address bus and secondly to control circuits (PB1, PB2), which are controlled by the control outputs (SO-S2) of the processor.

4. An automatic exchange according to claim 2, in which the control units (UC) are interchangeable and comprise a coupler (ARIT) for connection to the exchange network (RIT) and a second coupler (AMIT) for connection to the PCM-channels (LXnA to LXnD), which couplers are connected to the switching network, characterized in that:
- the couplers are controlled by the processor in the »memory space« mode,
- the first coupler (ARIT) is able to take control of the system bus (S-BUS),
- the management of access to the system bus (S-BUS) is effected by priority coders (CPD) and by point-to-point links (AUB; DUB) to the couplers.

5. An automatic exchange according to claim 4, characterized in that the second coupler (AMIC) comprises:
- an interface for the connection to the system bus (S-BUS),
- memories (ME, MR) in which the data concerning the management of the PCM-channels and of the message files for sending and for reception are memorized,
- send and receive circuits (EM, RM) connected to the PCM channels in order to exchange messages according to the semaphore channel procedure,
- an automatic device (AMP) for controlling the coupler,
- multiplexers (MXA, MXE, MXR) providing access to the memories through the automatic device and through the processor.

6. An automatic exchange according to claim 5, in which the choice of the PCM channels which are activated for receiving and sending, as well as the operating conditions are loaded into the memories during an initialisation phase by the processor, characterized in that the automatic device (AMP) comprises a ROM which is adressed by a counter and which controls in the time sharing mode the information transfers between the activated PCM channels, the memories and the automatic device.

7. An automatic exchange according to claim 2, in which the time division switches (CX1) are controlled by control memories (MC) and in which each marker (MQ) is controlled by a processor (mPC), characterized in that the marker is provided with a coupler for connection to the common informations exchange network (RIT1) which comprises
- an automatic device for controlling the coupler (AU),
- a send/receive circuit (HDLC1) on the common information exchange network (RIT), which is able to be controlled by the processor (mPC) and by the automatic device (AU),
- an interface for the connection with the bus of the processor, this interface being substantially composed of the elements (IN, RA1, RC, CB4, CB5, RDE, RDS),
- send and receive memories (MEM, MRE), which can be addressed by the counters (CB4, CB5) and by the processor (mPC),
- a control interface composed of the elements (BD, DEC4, DEC5) for controlling the memories (MC) of the switches (CX).

8. An automatic exchange according to claim 1, characterized in that said information exchange network (RIT) is duplicated (RIT1, RIT2) and is controlled by a duplicated distributor (DR1, DR2) having a rotating priority in order to share the load between them.

9. An automatic exchange according to claim 1, in which the control software is split up into independent logical machines to which different priorities are attributed, characterized in that the total number (p + q) of interchangeable control units is only slightly greater than the number p of control units (UC1), which is strictly required to hold the entire software, the set of logical machines being managed by a control unit microprocessor (UCP1) comprising a supervision program and a table indicating the location of the logical machines in the interchangeable units, whereby in the case of a fault in interchangeable units, the logical machines can be rearranged and whereby in the case of saturation of the set of still operating machines, they are rearranged by suppressing the low priority logical machines, the charging and the rearrangements of logical machines being controlled by this microprocessor via the exchange network (RIT).

10. An automatic exchange according to claim 2, characterized in that the control links between conrol units (UC) and terminal units (UT) are maintained in the case of a fault:
- by changing the PCM links,
- by modifying, in case of a faulty switch, the semipermanent links (LX) between control units (UC, UCP) and terminal units (UT).
